# EUROPÄISCHE PATENTSCHRIFT

(11) **EP 2 945 841 B1**
(45) Veröffentlichungstag und Bekanntmachung des Hinweises auf die Patenterteilung: **16.11.2016**
(21) Anmeldenummer: 14700751.2
(22) Anmeldetag: 17.01.2014
(51) Int. Cl.: B62L 3/02, B60T 11/236, B60T 11/16

(54) **GEBERARMATUR FÜR EINE HYDRAULISCHE SCHEIBENBREMSE**
MASTER CYLINDER DEVICE FOR A HYDRAULIC DISK BRAKE
ARMATURE DE CAPTEUR POUR UN FREIN À DISQUE HYDRAULIQUE

(30) Priorität: 18.01.2013 DE 102013200824
(43) Veröffentlichungstag der Anmeldung: 25.11.2015
(73) Patentinhaber: Gustav Magenwirth GmbH & Co. KG, 72574 Bad Urach (DE)
(72) Erfinder: RUOPP, Michael, 89180 Berghülen (DE)
(74) Vertreter: Friese Goeden Patentanwälte PartGmbB
(86) Internationale Anmeldenummer: PCT/EP2014/050946
(87) Internationale Veröffentlichungsnummer: WO 2014/111544

(56) Entgegenhaltungen:
- EP-A1- 1 346 893
- WO-A1-2013/000780
- DE-A1- 3 837 650

## Beschreibung

Die Erfindung betrifft eine Geberarmatur für eine hydraulische Scheibenbremse gemäß dem Oberbegriff von Anspruch 1 bzw. eine hydraulische Scheibenbremse mit einer derartigen Geberarmatur, insbesondere für lenkergeführte Fahrzeuge bzw. Fahrräder bzw. Motorräder.

Bei den bekannten Geberarmaturen für hydraulische Scheibenbremsen ist in der Regel ein Ausgleichsraum für Hydraulikmedium vorgesehen, damit bei zunehmendem Bremsbelagverschleiß Hydraulikmedium aus dem Ausgleichsraum in das übrige Bremssystem strömen kann. Außerdem können insbesondere durch Temperaturschwankungen bedingte Volumenänderungen ausgeglichen werden, die insbesondere bei starken und langen Bremsvorgängen auftreten können, bei denen das Hydraulikmedium heiß werden kann.

Bremssysteme, die einen Ausgleichsraum für Hydraulikmedium aufweisen nennt man offene Systeme. Bei den bekannten Geberarmaturen ist ein Kolben in einem Zylinderraum verschiebbar angeordnet. In dem Zylinderraum ist ein Druckraum vorgesehen, der durch den Kolben begrenzt wird. Der Druckraum ist über eine Verbindungsöffnung mit dem Ausgleichsraum verbunden. Über eine Dichtung (Primärdichtung) kann die Verbindung zwischen dem Druckraum und dem Ausgleichsraum unterbrochen werden, sobald durch die Bewegung des Kolbens die Sekundärdichtung die Verbindungsöffnung überfährt.

Zwischen dem Kolben und der Zylinderwand des Zylinderraums ist eine Dichtung (Sekundärdichtung) vorgesehen, die den Druckraum und den Ausgleichsraum gegenüber der Umgebung abdichtet.

Der Druckraum ist über eine Druckleitung mit einem Nehmer (bei Scheibenbremsen: dem Bremssattel) verbunden. Durch die Bewegung des Kolbens entlang der Hauptachse des Zylinders wird das Hydraulikmedium unter Druck gesetzt, sobald die Verbindung zwischen dem Druckraum und dem Ausgleichsraum unterbrochen wird.

Aus der EP1346893 ist ein Geberarmatur für eine hydraulische Bremse mit den Merkmalen des Oberbegriffes des Anspruchs 1 bekannt.

Die bekannten Geberarmaturen haben den Nachteil, dass diese entlang der Zylinderachse relativ lang bauend ausgebildet sind, was durch die Notwendigkeit bedingt ist, sowohl eine Primärdichtung als auch eine Sekundärdichtung vorzusehen. Dadurch ist die Geberarmatur relativ groß und schwer. Insbesondere bei Radialarmaturen, bei denen die Zylinderachse senkrecht zu der Achse des Lenkers verläuft bzw. Schrägradialarmaturen, bei denen die Zylinderachse in einem Winkel von weniger als 90 Grad verläuft, ergibt sich dadurch ein relativ großer Bauraum, wodurch sich ein relativ großer Abstand zwischen dem Lenker und dem Drehpunkt ergibt, um den sich der Hebel der Bremsarmatur bei der Betätigung der Geberarmatur dreht.
Der Erfindung liegt daher die Aufgabe zugrunde, eine Geberarmatur für eine hydraulische Scheibenbremse anzugeben, die entlang der Zylinderachse sehr kompakt ausgebildet ist.
Die Aufgabe der Erfindung wird mit einer Scheibenbremse gemäß den Merkmalen von Anspruch 1 gelöst. Lösungen der Erfindung sind auch in den unabhängigen Ansprüchen angegeben, die nur vorzugsweise auch die Merkmale zumindest eines der vorhergehenden Ansprüche enthalten. Vorteilhafte Ausgestaltungen der Erfindung sind Kombinationen der unabhängigen Ansprüche bzw. in den abhängigen Ansprüchen angegeben.

Gemäß einer Ausführung der Erfindung wird eine Geberarmatur für eine hydraulische Bremse angegeben, die einen Ausgleichsraum, einen Zylinder, in dem ein Kolben verschiebbar angeordnet ist, einen in dem Zylinder angeordneten Druckraum, der über zumindest eine Verbindungsöffnung mit dem Ausgleichsraum verbunden ist, und eine Dichtung zur Unterbrechung der Verbindung zwischen dem Druckraum und dem Ausgleichsraum aufweist, wobei die Dichtung den Ausgleichsraum und den Druckraum gegenüber der Umgebung abdichtet.

Diese Ausführung der Erfindung hat den Vorteil, dass die Dichtung eine Doppelfunktion hat, d.h. dass die Dichtung die Funktion der Primärdichtung, die die Verbindung zwischen dem Druckraum und dem Ausgleichsraum unterbricht, sobald der Kolben einen bestimmten Weg in Richtung Druckraum zurückgelegt hat, und gleichzeitig die Funktion der Sekundärdichtung erfüllt, die immer den Ausgleichsraum und den Druckraum gegenüber der Umgebung abdichtet. Dadurch ergibt sich der Vorteil, dass die Geberarmatur in der Richtung, in der sich der Kolben bei der Betätigung bewegt, relativ kurzbauend ausgebildet werden kann. Insbesondere ist das gegenüber bekannten Geberarmaturen der Fall, bei denen die Primärdichtung und die Sekundärdichtung auf dem Kolben in einem Abstand entlang der Achse des Kolbens bzw. des Zylinders angeordnet sind. Durch die erfinderische Anordnung lässt sich der axiale Bauraum (d.h. der Bauraum entlang der Richtung der Zylinder- bzw. Kolbenachse) des sogenannten Sekundärbereichs zwischen der Primärdichtung und der Sekundardichtung vermeiden.

Erfindungsgemäß kann die Dichtung den Ausgleichsraum gegenüber der Umgebung abdichten, wenn die Dichtung die Verbindung zwischen Druckraum und Ausgleichsraum unterbrochen hat.

Erfindungsgemäß kann der Kolben eine sich von einem Kolbenboden erstreckende Kolbenwand aufweisen, an deren Ende die Dichtung angeordnet ist.

Erfindungsgemäß kann in dem Zylinder ein hohler Stutzen angeordnet sein, der in den Kolben eintaucht.

Erfindungsgemäß kann die Rückstellfeder in einem Abschnitt des Ausgleichsraums angeordnet sein.

Erfindungsgemäß kann das Verhältnis der Länge des Kolbens zu dem Durchmesser des Kolbens ungefähr 3/6 bis 4/3 betragen.

Gemäß einer Ausführung der Erfindung wird eine Geberarmatur für eine hydraulische Bremse angegeben, die einen Ausgleichsraum, einen Zylinder, in dem ein Kolben verschiebbar angeordnet ist, einen in dem Zylinder angeordneten Druckraum, der über zumindest eine Verbindungsöffnung mit dem Ausgleichsraum verbunden ist, und eine Dichtung zur Unterbrechung der Verbindung zwischen dem Druckraum und dem Ausgleichsraum aufweist, wobei die Dichtung den Ausgleichsraum gegenüber der Umgebung abdichtet, wenn die Dichtung die Verbindung zwischen Druckraum und Ausgleichsraum unterbrochen hat.

Durch diese Merkmalskombination ergibt sich der oben beschriebene Vorteil, dass die Dichtung die oben beschriebenen Funktionen der Primärdichtung und der Sekundärdichtung erfüllt. Da die Dichtung den Ausgleichsraum auch nach dem Unterbrechen der Verbindung zwischen dem Druckraum und dem Ausgleichsraum gegenüber der Umgebung abdichtet, übernimmt die Dichtung auch die Funktion der dem Fachmann bekannten Sekundärdichtung. Daher kann die Geberarmatur wie oben erläutert relativ kurzbauend ausgebildet werden.

Erfindungsgemäß kann die Dichtung den Ausgleichsraum und den Druckraum gegenüber der Umgebung abdichten.

Erfindungsgemäß kann der Kolben eine sich von einem Kolbenboden erstreckende Kolbenwand aufweisen, an deren Ende die Dichtung angeordnet ist.

Erfindungsgemäß kann in dem Zylinder ein hohler Stutzen angeordnet sein, der in den Kolben eintaucht.

Erfindungsgemäß kann die Rückstellfeder in einem Abschnitt des Ausgleichsraums angeordnet sein.

Erfindungsgemäß kann das Verhältnis der Länge des Kolbens zu dem Durchmesser des Kolbens ungefähr 3/6 bis 4/3 betragen.

Gemäß einer Ausführung der Erfindung wird eine Geberarmatur für eine hydraulische Bremse angegeben, die einen Ausgleichsraum, einen Zylinder, in dem ein Kolben verschiebbar angeordnet ist, einen in dem Zylinder angeordneten Druckraum, der über zumindest eine Verbindungsöffnung mit dem Ausgleichsraum verbunden ist, und eine Dichtung zur Unterbrechung der Verbindung zwischen dem Druckraum und dem Ausgleichsraum aufweist, wobei der Kolben eine sich von einem Kolbenboden erstreckende Kolbenwand aufweist, an deren Ende die Dichtung angeordnet ist.

Durch diese Merkmalskombination ergibt sich der oben beschriebene Vorteil, dass die Dichtung die oben beschriebenen Funktionen der Primärdichtung und der Sekundärdichtung erfüllen kann. Da nur eine Dichtung benötigt wird, kann die Geberarmatur wie oben erläutert relativ kurzbauend ausgebildet werden.

Erfindungsgemäß kann die Dichtung den Ausgleichsraum und den Druckraum gegenüber der Umgebung abdichten.

Erfindungsgemäß kann die Dichtung den Ausgleichsraum gegenüber der Umgebung abdichten, wenn die Dichtung die Verbindung zwischen Druckraum und Ausgleichsraum unterbrochen hat.

Erfindungsgemäß kann in dem Zylinder ein hohler Stutzen angeordnet sein, der in den Kolben eintaucht. Erfindungsgemäß kann die Dichtung als Membran wirken.

Erfindungsgemäß kann die Rückstellfeder in einem Abschnitt des Ausgleichsraums angeordnet sein.

Erfindungsgemäß kann das Verhältnis der Länge des Kolbens zu dem Durchmesser des Kolbens ungefähr 3/6 bis 4/3 betragen.

Gemäß einer Ausführung der Erfindung wird eine Geberarmatur für eine hydraulische Bremse angegeben, die einen Ausgleichsraum und einen Zylinder aufweist, in dem ein Kolben entgegen der Kraft einer Rückstellfeder verschiebbar angeordnet ist, wobei in dem Zylinder ein hohler Stutzen angeordnet ist, der in den Kolben eintaucht.

Durch diese Merkmalskombination ergibt sich der Vorteil, dass eine Dichtung vorgesehen werden kann, die die Funktion der Primärdichtung und der Sekundärdichtung erfüllt.

Beispielsweise kann erfindungsgemäß eine Dichtung vorgesehen sein, die zwischen der Innenwand des Zylinders und der Außenwand des Stutzens abdichtet. Wenn in dem Stutzen eine Verbindungsöffnung zwischen dem Druckraum und dem Ausgleichsraum vorgesehen ist, wird die Verbindung zwischen Druckraum und Vorratsraum unterbrochen, sobald die Dichtung die Verbindungsöffnung überfährt. Nach dem Überfahren der Verbindungsöffnung dichtet die Dichtung somit den Druckraum nicht nur gegenüber der Umgebung, sondern auch gegenüber dem Ausgleichsraum ab. Bei einer weiteren Betätigung der Geberarmatur wird daher Druck im System aufgebaut.

Erfindungsgemäß kann ein in dem Zylinder angeordneter Druckraum über zumindest eine Verbindungsöffnung mit dem Ausgleichsraum verbunden sein, wobei eine Dichtung zur Unterbrechung der Verbindung zwischen dem Druckraum und dem Ausgleichsraum vorgesehen sein kann.

Erfindungsgemäß kann die Dichtung den Ausgleichsraum und den Druckraum gegenüber der Umgebung abdichten.

Erfindungsgemäß kann die Dichtung den Ausgleichsraum gegenüber der Umgebung abdichten, wenn die Dichtung die Verbindung zwischen Druckraum und Ausgleichsraum unterbrochen hat.

Erfindungsgemäß kann die Rückstellfeder in einem Abschnitt des Ausgleichsraums angeordnet sein.

Erfindungsgemäß kann der Kolben eine sich von einem Kolbenboden erstreckende Kolbenwand aufweisen, an deren Ende die Dichtung angeordnet ist.

Erfindungsgemäß kann der Kolben topfförmig ausgebildet sein.

Erfindungsgemäß kann der Kolben einen Kolbenboden und eine Kolbenwand aufweisen. Auf den Kolbenboden kann bei der Betätigung der Geberarmatur ein Druckstück wirken, um den Kolben in den Zylinder zu verschieben, wobei der Stutzen in den von der Kolbenwand umschlossenen Raum eintaucht.

Erfindungsgemäß kann eine Dichtung zur Unterbrechung der Verbindung zwischen dem Druckraum und dem Ausgleichsraum vorgesehen sein.

Erfindungsgemäß kann die Dichtung an der Stirnseite der Kolbenwand (die dem Kolbenboden gegenüberliegende Seite der Kolbenwand) des Kolbens angeordnet sein.

Erfindungsgemäß kann der Druckraum durch die Zylinderwand, den Zylinderboden, durch den Stutzen und die Dichtung definiert sein. Das hat den Vorteil, dass die Hydraulikflüssigkeit nicht mit dem Kolben in Berührung kommt, weshalb bei der Materialwahl des Kolbens nicht darauf geachtet werden muss, dass der Kolben resistent gegenüber der Hydraulikflüssigkeit ist.

Erfindungsgemäß kann die Dichtung zwei Dichtlippen aufweisen. Dabei kann eine Dichtlippe bezogen auf dem Zylinder nach außen (gegen die Zylinderwand) und die andere Dichtlippe nach innen (gegen die Außenwand des Stutzens) abdichten.

Erfindungsgemäß kann ein in dem Zylinder angeordneter Druckraum über zumindest eine Verbindungsöffnung mit dem Ausgleichsraum verbunden sein.

Erfindungsgemäß kann die Verbindungsöffnung zwischen dem Druckraum und dem Ausgleichsraum nach innen gerichtet sein bzw. in dem Stutzen ausgebildet werden.

Erfindungsgemäß kann zumindest ein Abschnitt des Ausgleichsraums in dem Kolben und dem Stutzen vorgesehen werden.

Erfindungsgemäß kann der Druckraum den Stutzen umschließen.

Erfindungsgemäß kann in dem Stutzen zumindest eine Verbindungsöffnung zur Verbindung des Druckraums mit dem Ausgleichsraum vorgesehen sein.

Erfindungsgemäß kann der Außendurchmesser des Stutzens in einem Bereich, der näher zum Kolben liegt, kleiner als der Außendurchmesser des Stutzens in einem Bereich sein, der vom Kolben weiter entfernt liegt.

Erfindungsgemäß kann in der Außenwand des Stutzens eine sanfte Stufe bzw. ein allmählicher Übergang von dem Bereich mit dem kleineren Außendurchmesser zu dem Bereich mit dem größeren Außendurchmesser vorgesehen sein.

Erfindungsgemäß kann der Innendurchmesser der Zylinderwand des Zylinders in einem Bereich, der näher zum Kolben liegt, größer als der Innendurchmesser der Zylinderwand in einem Bereich sein, der vom Kolben weiter entfernt liegt.

Erfindungsgemäß kann in der Innenwand des Zylinders eine sanfte Stufe bzw. ein allmählicher Übergang von dem Bereich mit dem größeren Innendurchmesser zu dem Bereich mit dem kleineren Innendurchmesser vorgesehen sein.

Erfindungsgemäß können die Übergänge von dem Außendurchmesser des Stutzens und dem Innendurchmesser des Zylinders bezogen auf die axiale Richtung des Zylinders bzw. des Stutzens auf der gleichen Höhe ausgebildet sein oder leicht versetzt zueinander ausgebildet sein. Wenn die Übergänge leicht versetzt sind, können die Übergänge vorzugsweise um 0,1 bis 2 mm, weiter vorzugsweise um 0,2 bis 1,5 mm, weiter vorzugsweise um 0,3 bis 1,0 mm, und bevorzugt ungefähr 0,5 mm zueinander versetzt sein. Der Übergang des Innendurchmessers der Zylinderwand kann dabei dichter zu dem Kolben liegen. Alternativ kann der Übergang des Außendurchmessers des Stutzens dichter zum Kolben liegen.

Gemäß einer Ausführung der Erfindung wird eine Geberarmatur für eine hydraulische Bremse angegeben, die einen Ausgleichsraum und einen Zylinder aufweist, in dem ein Kolben entgegen der Kraft einer Rückstellfeder verschiebbar angeordnet ist, wobei die Rückstellfeder in einem Abschnitt des Ausgleichsraums angeordnet ist.

Durch diese Merkmalskombination ergibt sich der Vorteil, dass der Druckraum besser von Luftblasen freigehalten besser entlüftet werden kann. Eventuell an der Rückstellfeder anhaftende Luftblasen bleiben in dem Ausgleichsraum und können somit beim Druckaufbau im Druckraum keinen Leistungsabfall bewirken.

Erfindungsgemäß kann ein in dem Zylinder angeordneter Druckraum über zumindest eine Verbindungsöffnung mit dem Ausgleichsraum verbunden sein, wobei eine Dichtung zur Unterbrechung der Verbindung zwischen dem Druckraum und dem Ausgleichsraum vorgesehen sein kann.

Erfindungsgemäß kann die Rückstellfeder zumindest teilweise in dem Kolben angeordnet sein.

Erfindungsgemäß kann die Rückstellfeder zumindest teilweise in dem hohlen Stutzen angeordnet sein.

Erfindungsgemäß kann ein Teil des Ausgleichsraums in dem Kolben angeordnet sein. Erfindungsgemäß kann ein Teil des Ausgleichsraums in dem hohlen Stutzen angeordnet sein.

Erfindungsgemäß kann die Dichtung den Ausgleichsraum und den Druckraum gegenüber der Umgebung abdichten.

Erfindungsgemäß kann die Dichtung den Ausgleichsraum gegenüber der Umgebung abdichten, wenn die Dichtung die Verbindung zwischen Druckraum und Ausgleichsraum unterbrochen hat.

Erfindungsgemäß kann der Kolben eine sich von einem Kolbenboden erstreckende Kolbenwand aufweisen, an deren Ende die Dichtung angeordnet ist.

Erfindungsgemäß kann in dem Zylinder ein hohler Stutzen angeordnet sein, der in den Kolben eintaucht.

Erfindungsgemäß kann das Verhältnis der Länge des Kolbens zu dem Durchmesser des Kolbens ungefähr 3/6 bis 4/3 betragen.

Gemäß einer Ausführung der Erfindung wird eine Geberarmatur für eine hydraulische Bremse angegeben, die einen Ausgleichsraum und einen Zylinder aufweist, in dem ein Kolben entgegen der Kraft einer Rückstellfeder verschiebbar angeordnet ist, wobei das Verhältnis der Länge des Kolbens zu dem Durchmesser des Kolbens ungefähr 3/6 bis 4/3 beträgt.

Erfindungsgemäß kann das Verhältnis der Länge des Kolbens zu dem Durchmesser des Kolbens bzw. das Verhältnis der Länge des Abstands von dem Führungsabschnitt zu dem Abstreifer zu dem Durchmesser des Kolbens ungefähr 3/5 bis 1 und vorzugsweise ungefähr 3/4 betragen.

Erfindungsgemäß kann die Rückstellfeder in einem Abschnitt des Ausgleichsraums angeordnet sein.

Erfindungsgemäß kann ein in dem Zylinder angeordneter Druckraum über zumindest eine Verbindungsöffnung mit dem Ausgleichsraum verbunden sein, wobei eine Dichtung zur Unterbrechung der Verbindung zwischen dem Druckraum und dem Ausgleichsraum vorgesehen sein kann.

Erfindungsgemäß kann die Dichtung den Ausgleichsraum und den Druckraum gegenüber der Umgebung abdichten.

Erfindungsgemäß kann die Dichtung den Ausgleichsraum gegenüber der Umgebung abdichten, wenn die Dichtung die Verbindung zwischen Druckraum und Ausgleichsraum unterbrochen hat.

Erfindungsgemäß kann der Kolben eine sich von einem Kolbenboden erstreckende Kolbenwand aufweisen, an deren Ende die Dichtung angeordnet ist.

Erfindungsgemäß kann in dem Zylinder ein hohler Stutzen angeordnet sein, der in den Kolben eintaucht.

Erfindungsgemäß kann bei den verschiedenen Ausführungen der Erfindung eine Schenkelfeder vorgesehen sein, die den Bremshebel in Richtung des Kolbens vorspannt. Dabei kann der Bremshebel derart angelenkt sein, dass er entgegen der normalen Betätigungsrichtung wegklappen kann.

Erfindungsgemäß kann der Druckraum einen Niedrigdruckraum und einen Hochdruckraum aufweisen. Dabei können der Niedrigdruckraum und der Hochdruckraum über einen Kanal miteinander verbunden sein, der bei der Betätigung der Geberarmatur ab bei einem bestimmten Hub verschlossen wird. Der effektive Querschnitt des Druckraums bei einer offenen Verbindung zwischen dem Niedrigdruckraum und dem Hochdruckraum kann dabei größer als der effektive Querschnitt des Hochdruckraums sein. Dabei kann der Niedrigdruckraum mit dem Ausgleichsraum über eine Überdruckventileinrichtung und gegebenenfalls eine Rückschlagventileinrichtung mit dem Ausgleichsraum verbunden sein.

Die Erfindung betrifft auch eine Geberarmatur für eine hydraulische Scheibenbremse mit einer Druckpunkteinstelleinrichtung gemäß dem Oberbegriff von Anspruch 11 bzw. eine hydraulische Scheibenbremse mit einer derartigen Geberarmatur, insbesondere für lenkergeführte Fahrzeuge bzw. Fahrräder bzw. Motorräder.

Bei bekannten Geberarmaturen offener Bremssysteme soll in der Regel vermeiden werden, dass durch die Verstellung des Druckpunktes das System quasi als geschlossenes System arbeitet. Daher sind die Druckpunkteinstelleinrichtungen bekannter Geberarmaturen derart ausgebildet, dass sichergestellt ist, dass die Verbindung zwischen dem Ausgleichsraum und dem Druckraum in jeder Position der Druckpunkteinstelleinrichtung nicht unterbrochen wird. Daher ergibt sich der Nachteil, dass durch die Berücksichtigung einer gewissen herstellungstoleranzbedingten Sicherheit die Geberarmatur relativ lang bauend ausgelegt werden muss. Insbesondere bei Radialarmaturen ist das nachteilig, weil man dort bestrebt ist, den Drehpunkt möglichst nahe zum Lenker anzuordnen.

Der Erfindung liegt daher auch die Aufgabe zugrunde, eine Geberarmatur anzugeben, die als Radialarmatur mit einem möglichst kleinem Abstand zum Lenker ausgebildet werden kann.

Diese Aufgabe der Erfindung wird durch eine Geberarmatur gemäß den Merkmalen von Anspruch 11 gelöst. Vorteilhafte Ausgestaltungen der Erfindung sind in den abhängigen Ansprüchen angegeben.

Gemäß einer Ausführung der Erfindung wird eine Geberarmatur für eine hydraulische Bremse angegeben, die einen Ausgleichsraum, einen Zylinder, in dem ein Kolben verschiebbar angeordnet ist, einen in dem Zylinder angeordneten Druckraum, der über zumindest eine Verbindungsöffnung mit dem Ausgleichsraum verbunden ist, eine Dichtung zur Unterbrechung der Verbindung zwischen dem Druckraum und dem Ausgleichsraum und eine Druckpunkteinstelleinrichtung aufweist, wobei die Druckpunkteinstelleinrichtung derart ausgebildet und angeordnet ist, dass die Verbindung zwischen dem Ausgleichsraum und dem Druckraum in der Ruhelage unterbrechbar ist.

Erfindungsgemäß kann die Druckpunkteinstelleinrichtung eine Rasteinrichtung aufweisen.

Erfindungsgemäß kann die Rasteinrichtung derart ausgebildet und angeordnet ist, dass die Verbindung zwischen dem Ausgleichsraum und dem Druckraum in der Ruhelage nicht unterbrochen ist, wenn sich die Rasteinrichtung in einer eingerasteten Stellung befindet.

Erfindungsgemäß kann die Geberarmatur einen Bremshebel und ein Druckstück aufweisen, wobei beim Betätigen der Bremse die Kraft von dem Bremshebel über das Druckstück auf den Kolben übertragen wird.

Erfindungsgemäß kann die Druckpunkteinstelleinrichtung derart ausgebildet und angeordnet sein, dass der Druckpunkt der Geberarmatur verstellt werden kann, indem der Bremshebel gemeinsam mit dem Druckstück gegenüber dem Gehäuse der Geberarmatur um einen Lagerbolzen verdreht wird.

Erfindungsgemäß kann die Druckpunkteinstelleinrichtung einen Bolzen aufweisen, der einen Konturabschnitt und einen Betätigungskopf aufweist. Dabei kann der Bolzen 191 vorzugsweise derart ausgebildet sein, dass er zur Druckpunkteinstellung an dem Betätigungskopf 194 gedreht werden kann.

Dabei kann der Bolzen erfindungsgemäß vorzugsweise im mittleren Abschnitt einen Konturabschnitt aufweisen, an dem das Druckstück anliegt. Dabei kann durch das Verdrehen des Bolzens die Winkellage des Druckstücks verändert werden, wodurch sich die Nullpunktlage des Kolbens in dem Zylinder und somit der Druckpunkt der Geberarmatur ändert.

Dabei kann der Konturabschnitt erfindungsgemäß derart ausgebildet sein, dass der Kolben in seiner Ruhelage so weit in den Zylinder verschiebbar ist, dass die Verbindung zwischen dem Ausgleichsraum und dem Druckraum unterbrochen ist.

Dabei kann der Bolzen eine Rasteinrichtung und vorzugsweise Rastnocken aufweisen. Die Rasteinrichtung bzw. die Rastnocken können dabei in entsprechende Konturen in dem Gehäuse eingreifen, um sicherzustellen, dass der Druckpunkt nicht derart eingestellt werden kann, dass die Verbindung zwischen Druckraum und Ausgleichsraum in der Ruhestellung des Kolbens unterbrochen ist.

Erfindungsgemäß kann die Geberarmatur des Weiteren eine Griffweiteneinstelleinrichtung zur Einstellung der Griffweite der Geberarmatur aufweisen. Die Griffweiteneinstelleinrichtung kann dabei derart ausgebildet und angeordnet sein, dass der Winkelabstand zwischen dem Druckstück und dem Bremshebel verstellt wird, die vorzugsweise beide um einen gemeinsamen Lagerbolzen gelagert sind.

Dabei kann die Griffweiteneinstelleinrichtung einen Bolzen aufweisen, der mit seinem Außengewinde in ein in dem Bremshebel vorgesehenes Innengewinde in den Bremshebel eingeschraubt ist. Dabei kann die Griffweiteneinstelleinrichtung derart ausgebildet und angeordnet sein, dass durch Drehen des Bolzens seine relative Lage in dem Bremshebel und damit der Winkelabstand zwischen dem Bremshebel und dem Druckstück, der die Griffweite bedingt, verstellt werden kann.

Erfindungsgemäß kann die Geberarmatur derart ausgebildet und angeordnet sein, dass sich bei der Druckpunkteinstellung gleichzeitig die Griffweite verstellt.

Die Erfindung betrifft auch eine Geberarmatur für eine hydraulische Scheibenbremse mit einer Druckpunkteinstelleinrichtung gemäß dem Oberbegriff von Anspruch 14 bzw. eine hydraulische Scheibenbremse mit einer derartigen Geberarmatur, insbesondere für lenkergeführte Fahrzeuge bzw. Fahrräder bzw. Motorräder.

Gemäß einer Ausführung der Erfindung wird eine Geberarmatur für eine hydraulische Bremse angegeben, die einen Ausgleichsraum, einen Zylinder, in dem ein Kolben verschiebbar angeordnet ist, und einen in dem Zylinder angeordneten Druckraum aufweist, der über zumindest eine Verbindungsöffnung mit dem Ausgleichsraum verbunden ist, wobei der Ausgleichsraum einen Deckel aufweist, wobei der Deckel einen Vorsprung aufweist, der über den Kolben hinausragt.

Diese Ausführung hat den Vorteil, dass der Deckel eine Doppelfunktion aufweist, weil er als Wegbegrenzung des Kolbens dient, wenn der Deckel den Ausgleichsraum verschließt.
Die Erfindung wird im Folgenden anhand der in den Figuren gezeigten Ausführungsbeispiele näher beschrieben.
- Fig. 1: zeigt eine Schnittansicht einer Geberarmatur gemäß einer Ausführung der Erfindung entlang der Linie I-I von Fig. 2.
- Fig. 2: zeigt eine Ansicht der Geberarmatur von Fig. 1 von oben.
- Fig. 3: zeigt eine Seitenansicht der Geberarmatur von Fig. 1.
- Fig. 4: zeigt eine perspektivische Ansicht der Geberarmatur von Fig. 1
- Fig. 5: zeigt eine Schnittansicht einer Geberarmatur gemäß einer weiteren Ausführung der Erfindung entlang der Linie V-V von Fig. 6.
- Fig. 6: zeigt eine Ansicht der Geberarmatur von Fig. 5 von oben.
- Fig. 7: zeigt eine Seitenansicht der Geberarmatur von Fig. 5.
- Fig. 8: zeigt eine perspektivische Ansicht der Geberarmatur von Fig. 5.
- Fig. 9: zeigt eine Schnittansicht einer Geberarmatur gemäß einer weiteren Ausführung der Erfindung entlang der Linie IX-IX von Fig. 10.
- Fig. 10: zeigt eine Ansicht der Geberarmatur von Fig. 9 von oben.
- Fig. 11: zeigt eine Seitenansicht der Geberarmatur von Fig. 9.
- Fig. 12: zeigt eine perspektivische Ansicht der Geberarmatur von Fig. 9.
- Fig. 13: zeigt eine Detailteilansicht von Fig. 1, die insbesondere die Griffweiteneinstelleinrichtung genauer zeigt.
- Fig. 14: zeigt eine Detailteilansicht von Fig. 1, die insbesondere den Kolben und die Dichtung genauer zeigt.
- Fig. 15: zeigt eine Detailteilansicht einer Geberarmatur gemäß einer weiteren Ausführung der Erfindung, die abgesehen von den unten beschriebenen Unterschieden einem Ausschnitt von Fig. 1 entspricht.
- Fig. 16: zeigt eine Schnittansicht einer Geberarmatur gemäß einer weiteren Ausführung der Erfindung, die von der Schnittebene den Darstellungen der Figuren 1, 5 und 9 entspricht.
- Fig. 17: zeigt eine Detailteilansicht von Fig. 16 im Kreis XVII.
- Fig. 18: zeigt eine Detailteilansicht von Fig. 16 im Kreis XVIII.
- Fig. 19: zeigt eine perspektivische Darstellung des Bolzens der Druckpunkteinstelleinrichtung von den Figuren 17 und 18.
- Fig. 20: zeigt eine Seitenansicht des Bolzens von Figur 19.
- Fig. 21: zeigt eine Schnittansicht einer Geberarmatur gemäß einer weiteren Ausführung der Erfindung, die von der Schnittebene den Darstellungen der Figuren 1, 5, 9, und 16 entspricht.
- Fig. 22: zeigt eine Schnittansicht einer Geberarmatur gemäß einer weiteren Ausführung der Erfindung, die von der Schnittebene den Darstellungen der Figuren 1, 5, 9, 16 und 21 entspricht.
- Fig. 23: zeigt eine Schnittansicht einer Geberarmatur gemäß einer weiteren Ausführung der Erfindung, die von der Schnittebene den Darstellungen der Figuren 1, 5, 9, 16, 21 und 22 entspricht.

In der Beschreibung des Ausführungsbeispiels werden folgende Bezugszeichen verwendet:
- 100: Geberarmatur
- 101: Hydraulikleitung
- 102: Hülse
- 103: Druckleitungsanschlussstück
- 104: Leitung
- 105: Lenkeraufnahme
- 106: Gegenstück
- 107: Gehäuse
- 110: Bremshebel
- 111: Lagerbolzen
- 112: Lagerbolzenaufnahme
- 115: Innengewinde
- 120: Druckstück
- 121: Lagerbolzenaufnahme
- 122: Federaufnahme
- 123: Bolzenwiderlagerfläche
- 124: Kolbenwiderlagerfläche
- 130: Druckraum
- 140: Zylinder
- 141: Zylinderwand
- 142: Zylinderboden
- 143: Stutzen
- 144: Rückstellfeder
- 150: Kolben
- 151: Kolbenboden
- 152: Kolbenwand
- 153: Dichtungsaufnahme
- 154: Abstreiferaufnahme
- 155: Federaufnahme
- 156: Verjüngung
- 157: Führungsabschnitt
- 160: Dichtung
- 161: Dichtlippe (äußere)
- 162: Dichtlippe (innere)
- 163: Befestigungsabschnitt
- 169: Abstreifer
- 170: Ausgleichsraum
- 171: Verbindungsöffnung
- 172: Innenraum
- 173: Leitung
- 174: Behälter
- 175: Balg
- 176: Deckel
- 180: Griffweiteneinstelleinrichtung
- 181: Bolzen
- 182: Feder
- 183: Widerlagerfläche
- 184: Betätigungskopf
- 185: Außengewinde
- 190: Druckpunkteinstelleinrichtung
- 191: Bolzen
- 192: Konturabschnitt
- 194: Betätigungskopf

- 200: Geberarmatur
- 201: Hydraulikleitung
- 202: Hülse
- 204: Leitung
- 205: Lenkeraufnahme
- 206: Gegenstück
- 207: Gehäuse
- 210: Bremshebel
- 211: Lagerbolzen
- 212: Lagerbolzenaufnahme
- 215: Innengewinde
- 220: Druckstück
- 221: Lagerbolzenaufnahme
- 222: Federaufnahme
- 230: Druckraum
- 240: Zylinder
- 241: Zylinderwand
- 242: Zylinderboden
- 243: Stutzen
- 244: Rückstellfeder
- 250: Kolben
- 260: Dichtung
- 261: Dichtlippe (äußere)
- 262: Dichtlippe (innere)
- 263: Befestigungsabschnitt
- 270: Ausgleichsraum
- 271: Verbindungsöffnung
- 272: Innenraum
- 274: Behälter
- 275: Balg
- 276: Deckel
- 280: Griffweiteneinstelleinrichtung
- 281: Bolzen
- 284: Betätigungskopf
- 285: Außengewinde
- 290: Druckpunkteinstelleinrichtung
- 291: Bolzen
- 294: Betätigungskopf

- 300: Geberarmatur
- 303: Druckleitungsanschlussstück
- 304: Leitung
- 305: Lenkeraufnahme
- 306: Gegenstück
- 307: Gehäuse
- 310: Bremshebel
- 311: Lagerbolzen
- 312: Federaufnahme
- 315: Innengewinde
- 320: Druckstück
- 321: Lagerbolzenaufnahme
- 330: Druckraum
- 340: Zylinder
- 341: Zylinderwand
- 342: Zylinderboden
- 343: Stutzen
- 350: Kolben
- 355: Federaufnahme
- 360: Dichtung
- 370: Ausgleichsraum
- 372: Innenraum
- 374: Behälter
- 375: Balg
- 376: Deckel
- 380: Griffweiteneinstelleinrichtung
- 381: Bolzen
- 382: Feder
- 384: Betätigungskopf
- 385: Außengewinde
- 390: Druckpunkteinstelleinrichtung
- 391: Bolzen
- 394: Betätigungskopf

- 400: Geberarmatur4
- 401: Hydraulikleitung
- 402: Hülse
- 403: Druckleitungsanschlussstück
- 404: Leitung
- 405: Lenkeraufnahme
- 407: Gehäuse
- 410: Bremshebel
- 411: Lagerbolzen
- 420: Druckstück
- 424: Kolbenwiderlagerfläche
- 430: Druckraum
- 440: Zylinder
- 441: Zylinderwand
- 4411: Bereich mit größerem Innendurchmesser
- 4412: Bereich mit kleinerem Innendurchmesser
- 442: Zylinderboden
- 443: Stutzen
- 4431: Bereich mit kleinerem Außendurchmesser
- 4432: Bereich mit größerem Außendurchmesser
- 444: Rückstellfeder
- 450: Kolben
- 451: Kolbenboden
- 452: Kolbenwand
- 453: Dichtungsaufnahme
- 454: Abstreiferaufnahme
- 455: Federaufnahme
- 456: Verjüngung
- 457: Führungsabschnitt
- 460: Dichtung
- 461: Dichtlippe (äußere)
- 462: Dichtlippe (innere)
- 463: Befestigungsabschnitt
- 468: Stift (Zur Begrenzung der Kolbenbewegung)
- 469: Abstreifer
- 470: Ausgleichsraum
- 471: Verbindungsöffnung
- 472: Innenraum
- 473: Leitung
- 474: Behälter
- 475: Balg
- 476: Deckel
- 490: Druckpunkteinstelleinrichtung
- 491: Bolzen
- 492: Konturabschnitt

- 500: Geberarmatur
- 501: Hydraulikleitung
- 502: Hülse
- 503: Druckleitungsanschlussstück
- 504: Leitung
- 505: Lenkeraufnahme
- 506: Gegenstück
- 507: Gehäuse
- 510: Bremshebel
- 511: Lagerbolzen
- 512: Lagerbolzenaufnahme
- 515: Innengewinde
- 520: Druckstück
- 521: Lagerbolzenaufnahme
- 522: Federaufnahme
- 523: Bolzenwiderlagerfläche
- 524: Kolbenwiderlagerfläche
- 529: Bolzenwiderlagerfläche
- 530: Druckraum
- 540: Zylinder
- 541: Zylinderwand
- 542: Zylinderboden
- 543: Stutzen
- 544: Rückstellfeder
- 550: Kolben
- 551: Kolbenboden
- 552: Kolbenwand
- 553: Dichtungsaufnahme
- 554: Abstreiferaufnahme
- 555: Federaufnahme
- 556: Verjüngung
- 557: Führungsabschnitt
- 560: Dichtung
- 561: Dichtlippe (äußere)
- 562: Dichtlippe (innere)
- 563: Befestigungsabschnitt
- 569: Abstreifer
- 570: Ausgleichsraum
- 571: Verbindungsöffnung
- 572: Innenraum
- 573: Leitung
- 574: Behälter
- 575: Balg
- 576: Deckel
- 5761: Vorsprung
- 5762: Rastabschnitt
- 5763: Rastabschnitt
- 580: Griffweiteneinstelleinrichtung
- 581: Bolzen
- 582: Feder
- 583: Widerlagerfläche
- 584: Betätigungskopf
- 585: Außengewinde
- 590: Druckpunkteinstelleinrichtung
- 591: Bolzen
- 592: Konturabschnitt
- 593: Rastnocken
- 594: Betätigungskopf

- 600: Geberarmatur
- 601: Hydraulikleitung
- 602: Hülse
- 603: Druckleitungsanschlussstück
- 604: Leitung
- 605: Lenkeraufnahme
- 606: Gegenstück
- 607: Gehäuse
- 610: Bremshebel
- 615: Innengewinde
- 620: Druckstück
- 630: Druckraum
- 640: Zylinder
- 641: Zylinderwand
- 642: Zylinderboden
- 643: Stutzen
- 650: Kolben
- 655: Federaufnahme
- 660: Dichtung
- 661: Dichtlippe (äußere)
- 662: Dichtlippe (innere)
- 670: Ausgleichsraum
- 671: Verbindungsöffnung
- 672: Innenraum
- 673: Leitung
- 674: Behälter
- 675: Balg
- 676: Deckel
- 6761: Fortsatz
- 6762: Verriegelungsstift
- 6763: Scharnier
- 6764: Haltevorsprung
- 680: Griffweiteneinstelleinrichtung
- 681: Bolzen
- 685: Außengewinde

- 700: Geberarmatur
- 704: Leitung
- 705: Lenkeraufnahme
- 707: Gehäuse
- 730: Druckraum
- 740: Zylinder
- 741: Zylinderwand
- 742: Zylinderboden
- 743: Stutzen
- 744: Feder
- 750: Kolben
- 757: Führungsabschnitt
- 760: Dichtung
- 761: Dichtlippe (äußere)
- 762: Dichtlippe (innere)
- 770: Ausgleichsraum
- 771: Verbindungsöffnung
- 772: Innenraum
- 774: Behälter

- 800: Geberarmatur
- 804: Leitung
- 805: Lenkeraufnahme
- 807: Gehäuse
- 830: Druckraum
- 831: Hochdruckraum
- 832: Kanal
- 833: Niedrigdruckraum
- 834: Verbindungsöffnung
- 835: Ventil
- 840: Zylinder
- 841: Zylinderwand
- 842: Zylinderboden
- 843: Stutzen
- 844: Feder
- 850: Kolben
- 852: Kolbenwand
- 857: Führungsabschnitt
- 858: Bund
- 859: Dichtungsaufnahme
- 860: Dichtung
- 861: Dichtlippe (äußere)
- 862: Dichtlippe (innere)
- 870: Ausgleichsraum
- 871: Verbindungsöffnung
- 872: Innenraum
- 874: Behälter
- 877: Innenraum
- 880: Dichtung

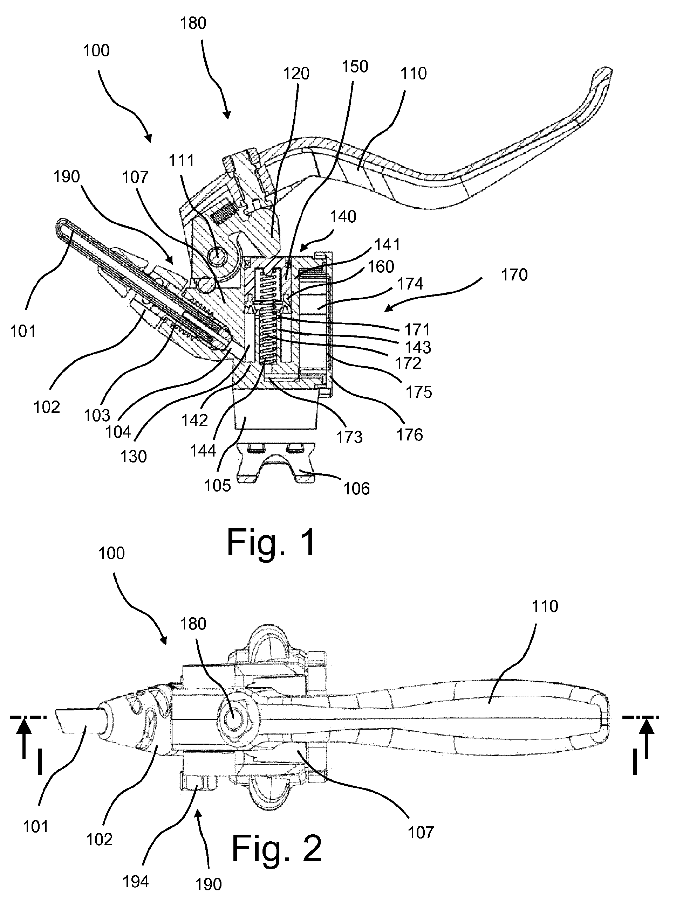

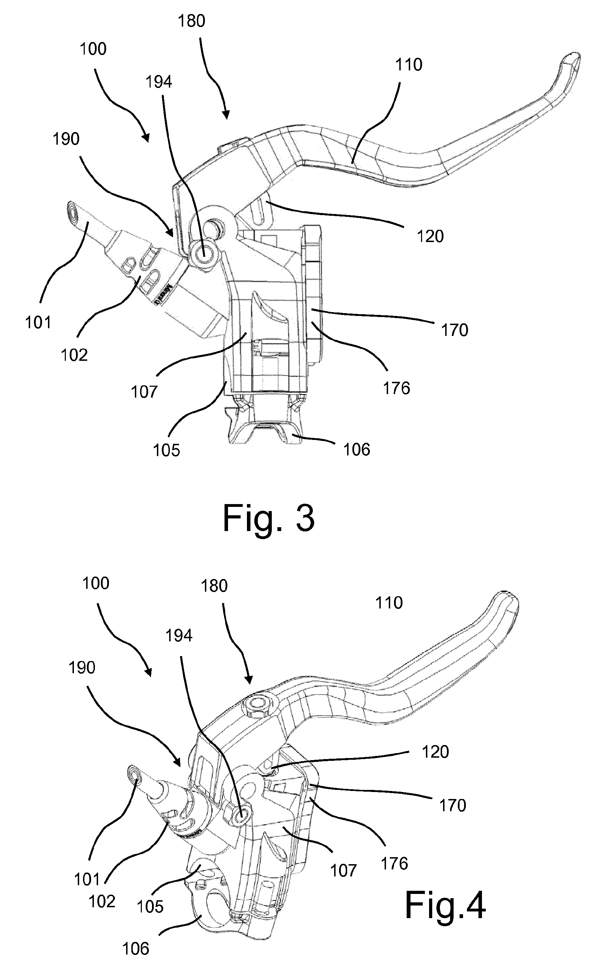

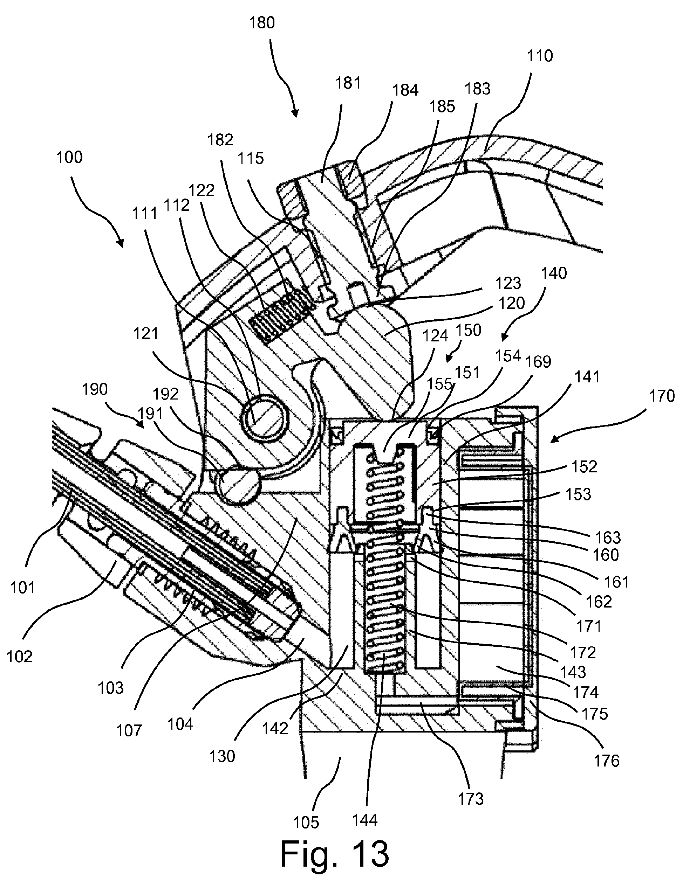

Die Figuren 1 bis 4 sowie 13 und 14 zeigen eine Geberarmatur für eine hydraulische Fahrradscheibenbremse gemäß einer Ausführung der Erfindung.

Die Geberarmatur 100 weist einen Bremshebel 110 und ein Druckstück 120 auf, die jeweils über einen Lagerbolzen 111 drehbar an einem Gehäuse 107 gelagert sind.

Der Bremshebel 110 weist eine Lagerbolzenaufnahme 112 auf, mit der der Bremshebel 110 um den Lagerbolzen 111 drehbar gelagert ist. Das Druckstück 120 weist eine Lagerbolzenaufnahme 121 auf, mit der das Druckstück 120 um den Lagerbolzen 111 drehbar gelagert ist.

Die Geberarmatur 100 weist eine Lenkeraufnahme 105 und ein Gegenstück 106 auf, mit denen die Geberarmatur auf eine dem Fachmann bekannte Weise an einem nicht dargestellten Lenker eines Zweirads befestigt werden kann.

Eine Hydraulikleitung 101 ist mit einem Druckleitungsanschlussstück 103 an dem Gehäuse 107 befestigt. Eine Hülse 102 ist auf der Hydraulikleitung 101 vorgesehen.

In dem Gehäuse 107 ist ein Zylinder 140 vorgesehen, in dem ein Kolben 150 verschiebbar angeordnet ist.

Das Druckstück 120 weist eine Kolbenwiderlagerfläche 124 auf, die an dem Kolben 150 anliegt, und über die bei der Betätigung die Kraft auf den Kolben 150 übertragen wird.

Über eine Griffweiteneinstelleinrichtung 180 kann die Griffweite der Geberarmatur 100 eingestellt werden, indem der Winkelabstand zwischen dem Druckstück 120 und dem Bremshebel 110 verstellt wird, die beide um einen gemeinsamen Lagerbolzen 111 gelagert sind.

Die Griffweiteneinstelleinrichtung 180 weist einen Bolzen 181 auf, der mit seinem Außengewinde 185 in ein in dem Bremshebel 110 vorgesehenes Innengewinde 115 in den Bremshebel 110 eingeschraubt ist. An seinem äußeren Ende weist der Bolzen einen Betätigungskopf 184 auf.
An seinem inneren Ende weist der Bolzen 181 eine Widerlagerfläche 183 auf, die auf einer Bolzenwiderlagerfläche 123 des Druckstücks 120 aufliegt. Mit einer in einer in dem Druckstück 120 vorgesehenen Federaufnahme 122 angeordneten Feder 182 ist der Bremshebel 110 in Richtung des Druckstücks 120 derart vorgespannt, dass die Bolzenwiderlagerfläche 183 auf der Widerlagerfläche 123 des Druckstücks 120 aufliegt. Durch Drehen des Bolzens 181 kann seine relative Lage in dem Bremshebel 110 und damit der Winkelabstand zwischen dem Bremshebel 110 und dem Druckstück 120, der die Griffweite bedingt, verstellt werden.

Über eine Druckpunkteinstelleinrichtung 190 kann der Druckpunkt der Geberarmatur verstellt werden, indem der Bremshebel 110 gemeinsam mit dem Druckstück 120 gegenüber dem Gehäuse 107 um den Lagerbolzen 111 verdreht wird.

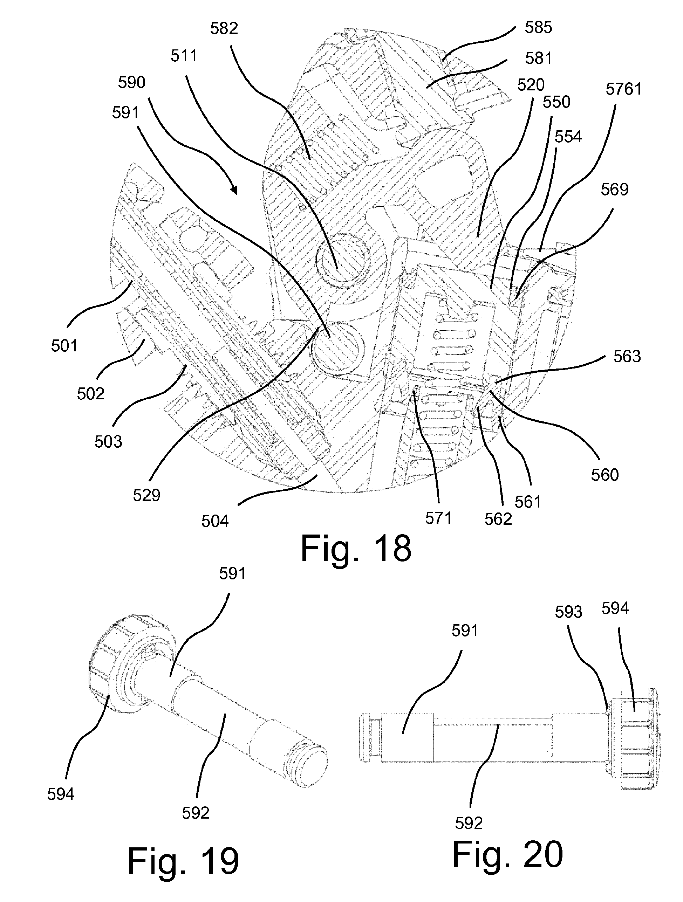

Die Druckpunkteinstelleinrichtung 190 weist einen Bolzen 191 auf, der entsprechend dem in den Figuren 19 und 20 gezeigten Bolzen 591 aufgebaut ist, der einen Konturabschnitt 592 und einen Betätigungskopf 594 aufweist.

Zur Druckpunkteinstellung kann der Bolzen 191 an dem Betätigungskopf 194 gedreht werden. Der Bolzen weist im mittleren Abschnitt einen Konturabschnitt 192 auf, an dem das Druckstück 120 anliegt. Durch das Verdrehen des Bolzens 191 wird somit der Winkel des Druckstücks 120 verändert, wodurch sich die Nullpunktlage des Kolbens 150 in dem Zylinder 140 und somit der Druckpunkt der Geberarmatur ändert.

Wenn der Konturabschnitt 192 derart ausgebildet ist, dass der Kolben 150 in seiner Ruhelage so weit in den Zylinder 140 geschoben wird, dass die Verbindung zwischen dem Ausgleichsraum 170 und dem Druckraum 130 unterbrochen ist, arbeitet das System quasi als geschlossenes System. Da das bei offenen Systemen in der Regel vermieden werden soll, weist der Bolzen 191 vorzugsweise Rastnocken auf, die beispielsweise wie die in den Figuren 19 und 20 gezeigten Rastnocken 593 ausgebildet sind. Diese greifen in entsprechende Konturen in dem Gehäuse 107 ein, um sicherzustellen, dass der Druckpunkt nicht derart eingestellt werden kann, dass die Verbindung zwischen Druckraum 130 und Ausgleichsraum 170 in der Ruhestellung des Kolbens 150 unterbrochen ist.

Bei der Druckpunkteinstellung verstellt sich gleichzeitig die Griffweite. Da die Griffweite mit der Griffweiteneinstelleinrichtung 180 unabhängig von dem Druckpunkt verstellt wird (weil sich das Druckstück 120 nicht mitdreht, sondern nur der Bremshebel 110), kann eine Verstellung der Griffweite mit der Griffweiteneinstellvorrichtung 180 kompensiert werden.

Der Zylinder 140 weist eine Zylinderwand 141 und einen Zylinderboden 142 auf. An dem Zylinderboden 142 ist ein hohler Stutzen 143 vorgesehen, dessen Inneres einen Ausgleichsraum 170 für das Hydraulikmedium des Systems enthält.

Ein Druckraum 130 umschließt den Stutzen 143, d.h. dass der Druckraum 130 bezogen auf den Zylinder 140 nach Innen durch die Außenwand des Stutzens 143 und nach Außen durch die Innenwand der Zylinderwand 141 begrenzt ist. Der Druckraum 130 hat im Bereich des Zylinderbodens eine Öffnung zu einer Leitung 104, die mit der Hydraulikleitung 101 verbunden ist, die zu einer nicht dargestellten Nehmerarmatur (z.B. Bremszange einer hydraulischen Fahrradscheibenbremse) führt.

Der Kolben 150 weist einen Kolbenboden 151 und eine Kolbenwand 152 auf. Der Kolben 150 ist somit topfförmig ausgebildet, wobei der Stutzen 143 in den Kolben 150 eintaucht. In dem durch den Stutzen 143 und den Kolben gebildeten Raum ist eine Rückstellfeder 144 vorgesehen, die am Kolben 150 in eine Federaufnahme 155 eingreift, die an der Innenseite des Kolbenbodens 151 vorgesehen ist.

Die Rückstellfeder 144 weist im Gegensatz zu den bei bekannten Geberarmaturen eingesetzten Federn einen relativ kleinen Durchmesser auf. Ein dadurch bedingtes leichteres Ausrücken der Rückstellfeder 144 ist bei der vorliegenden Konstruktion nicht problematisch, weil die Rückstellfeder 144 in dem Stutzen 143 sehr gut geführt wird und die Rückstellfeder 144 nicht an die Dichtfläche grenzt, weil sie in dem Ausgleichsraum 170 (Innenraum des Stutzens 143) angeordnet ist.

Im Bereich der Federaufnahme 155 weist der Kolben 155 einen Führungsabschnitt 157 auf. Auf seiner anderen Seite des Kolbens 150 ist der Abstreifer 169 vorgesehen. Mit dem Führungsabschnitt 157 und dem Abstreifer 169 wird der Kolben 150 im dem Zylinder 140 geführt. Zwischen dem Führungsabschnitt 157 und dem Abstreifer 169 weist der Kolben 150 eine Verjüngung 156 auf. Diese Verjüngung 156 hat einen hinreichenden Abstand von dem Zylinder 140, so dass die Oberfläche des Kolbens 150 im Bereich 156 nicht so glatt ausgebildet werden muss. Insgesamt ergeben sich durch diese Ausbildung gute Gleiteigenschaften und eine geringe Gleitreibung.

Das Führungsverhältnis des Kolbens 150, d.h. das Verhältnis der Länge des Abstands von dem Führungsabschnitt 157 zu dem Abstreifer 169 zu dem Durchmesser des Kolbens 150 (bzw. das Verhältnis der Länge des Kolbens zu dem Durchmesser des Kolbens) beträgt ungefähr 3/4. Das ist deutlich weniger als bei bekannten Geberarmaturen für hydraulische Fahrradscheibenbremsen, bei denen das Führungsverhältnis ungefähr 2 beträgt.

Gemäß Ausführungsvarianten der Erfindung könnte der Kolben zusätzlich oder alternativ auf der Innenseite mit einer Führung auf dem auf dem Stutzen geführt werden.

Bei der Betätigung der Geberarmatur 100 wird der Kolben 150 in dem Zylinder 140 in Richtung Zylinderboden 142 entgegen der Kraft der Rückstellfeder 144 verschoben, wobei der Stutzen 143 tiefer in den Kolben 150 eintaucht.

An dem Ende des Stutzens 143 sind mehrere Verbindungsöffnungen 171 vorgesehen, um den Druckraum 130 mit dem Ausgleichraum 170 zu verbinden.

Der Ausgleichsraum 170 umfasst den Innenraum 172 in dem Stutzen 143. Der Innenraum 172 kann unter bestimmten Bedingungen bereits als Ausgleichsraum 170 ausreichen. Üblicherweise werden größere Ausgleichsvolumen zur Verfügung gestellt. Bei der gezeigten Ausführung ist der Innenraum 172 über eine Leitung 173, die ebenfalls Ausgleichsvolumen bereitstellt, mit einem Behälter 174 verbunden, der seitlich an dem Gehäuse 107 angeordnet ist. In dem Behälter 174 ist ein Balg vorgesehen, der sich an das Volumen von Hydraulikflüssigkeit in dem Behälter anpasst. Der Behälter 174 ist mit einem Deckel 176 verschlossen.

An der Kolbenwand 152 ist stirnseitig eine Dichtungsaufnahme 153 vorgesehen, in der eine Dichtung 160 angeordnet ist. Auf der in Axialrichtung anderen Seite der Kolbenwand 152 ist eine Abstreiferaufnahme 154 vorgesehen, in der der Abstreifer 169 angeordnet ist. Die Abstreiferaufnahme 154 befindet sich etwa in der Höhe des Kolbenbodens 152.

Die Dichtung 160 weist einen Befestigungsabschnitt 163 auf, mit dem die Dichtung 160 in der Dichtungsaufnahme 153 angeordnet ist.

Die Dichtung 160 ist in Axialrichtung des Kolbens 150 unterhalb des Kolbens 150 angeordnet.

Der Druckraum 130 wird somit durch den Zylinderboden 142, die Zylinderwand 141, den Stutzen 143 und die Dichtung 160 begrenzt. Im Gegensatz zu bekannten Geberarmaturen kommt die Hydraulikflüssigkeit nicht mit dem Kolben 150, sondern nur mit der auf seiner Stirnseite bzw. auf dem Ende der Kolbenwand 152 angeordneten Dichtung 160 in Kontakt.

Die Dichtung 160 weist eine äußere Dichtlippe 161 auf, die den Druckraum 130 und den Ausgleichsraum 170 gegenüber der Umgebung abdichtet. Die äußere Dichtlippe 161 der Dichtung 160 hat somit die Funktion der Sekundärdichtung.

Die Dichtung 160 weist eine innere Dichtlippe 162 auf, die die Verbindung zwischen dem Druckraum 130 und dem Ausgleichsraum 170 unterbindet, sobald die innere Dichtlippe 162 die Verbindungsöffnungen 171 überfährt. Die innere Dichtlippe 162 der Dichtung 160 hat somit die Funktion der Primärdichtung.

Die innere Dichtlippe 162 ist wesentlich dünner als die äußere Dichtlippe 161 ausgebildet. Die Materialstärke der inneren Dichtlippe 162 beträgt ungefähr 30 bis 70%, vorzugsweise 40 bis 60% und bevorzugt ungefähr 50% der Materialstärke der äußeren Dichtlippe 161. Alternativ oder zusätzlich kann die Dichtung 160 aus mehreren Materialien ausgebildet sein, damit die innere Dichtlippe 162 elastischer als die äußere Dichtlippe 161 ausgebildet werden kann. Eine derartige Ausbildung hat den Vorteil, dass bei einem Druckabfall in dem Druckraum die Hydraulikflüssigkeit eher aus dem Ausgleichsraum in den Druckraum gesaugt wird und ein Einströmen von Gas aus der Umgebung vermieden wird.

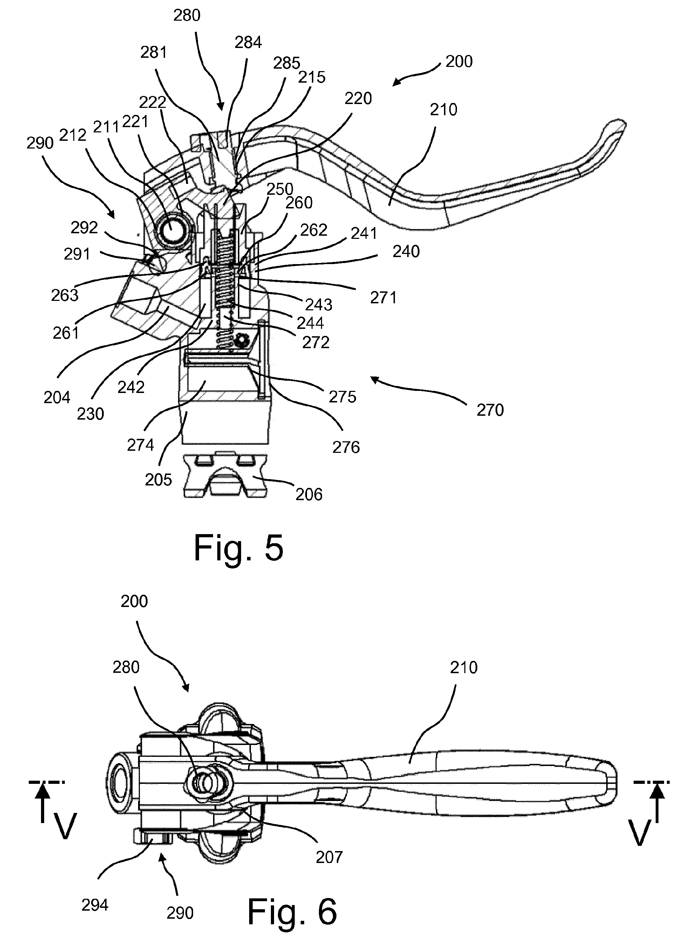

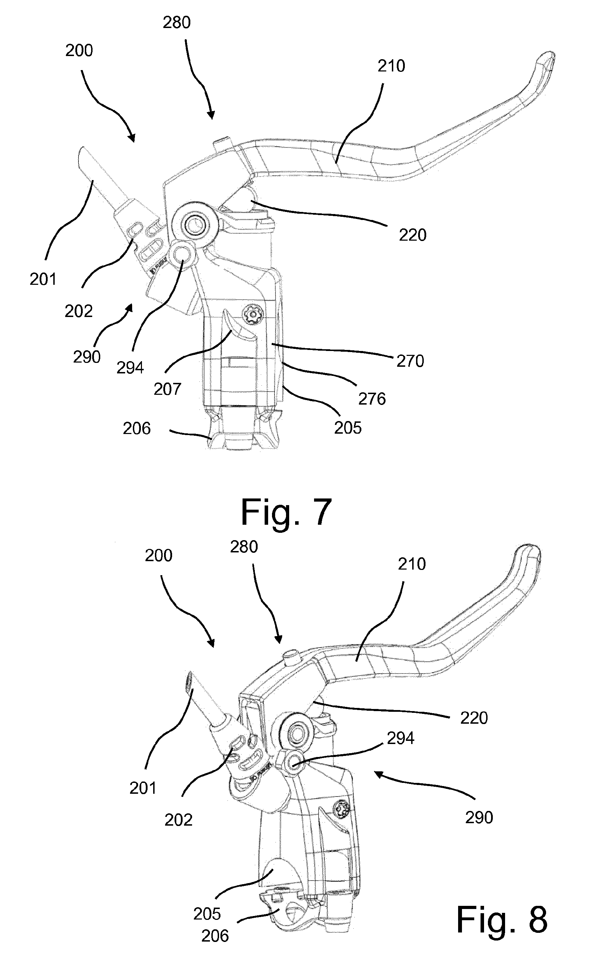

Die Figuren 5 bis 8 zeigen eine Geberarmatur für eine hydraulische Fahrradscheibenbremse gemäß einer weiteren Ausführung der Erfindung, die im Wesentlichen der im Zusammenhang mit den Figuren 1 bis 4 und 13 bis 14 beschriebenen Geberarmatur entspricht. Gleiche bzw. sich entsprechende Teile sind mit sich entsprechenden aber um 100 höheren Bezugszeichen bezeichnet. Im Folgenden werden nur die Unterschiede der Geberarmatur der Figuren 5 bis 8 gegenüber der Ausführung der Figuren 1 bis 4 und 13 bis 14 beschrieben. Im Übrigen wird auf die Beschreibung der anderen Ausführungsbeispiele und insbesondere die Beschreibung des Ausführungsbeispiels der Figuren 1 bis 4 und 13 bis 14 verwiesen.

Bei der in den Figuren 5 bis 8 gezeigten Geberarmatur 200 ist der Ausgleichsraum 270 zwischen dem Zylinder 240 und der Lenkeraufnahme 205 angeordnet. Dadurch mündet der Innenraum 272 des Stutzens 243 unmittelbar in den Behälter 274. Der Deckel 276 ist seitlich angeordnet.

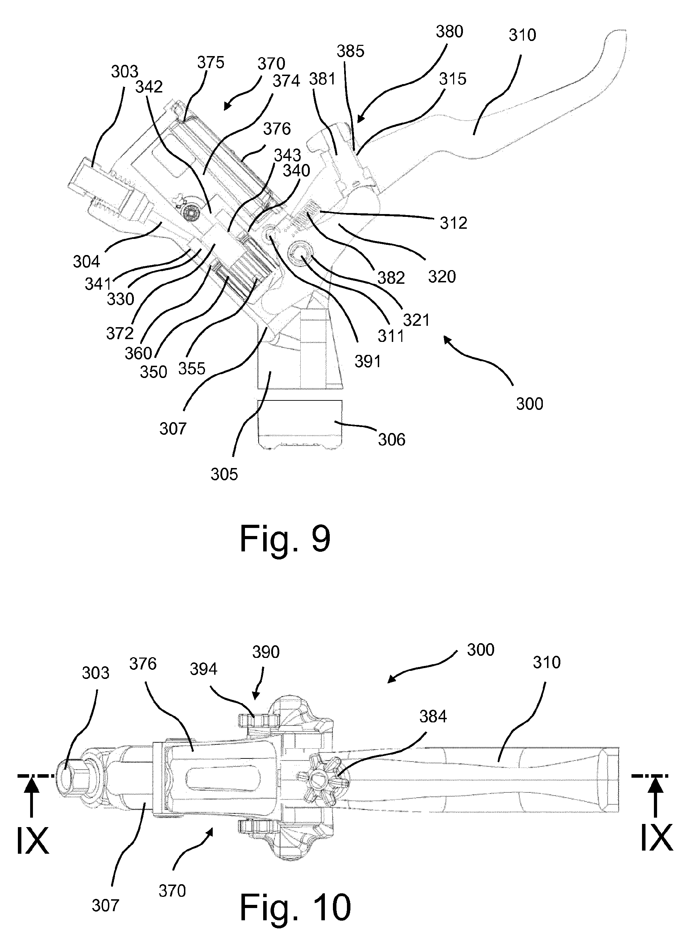

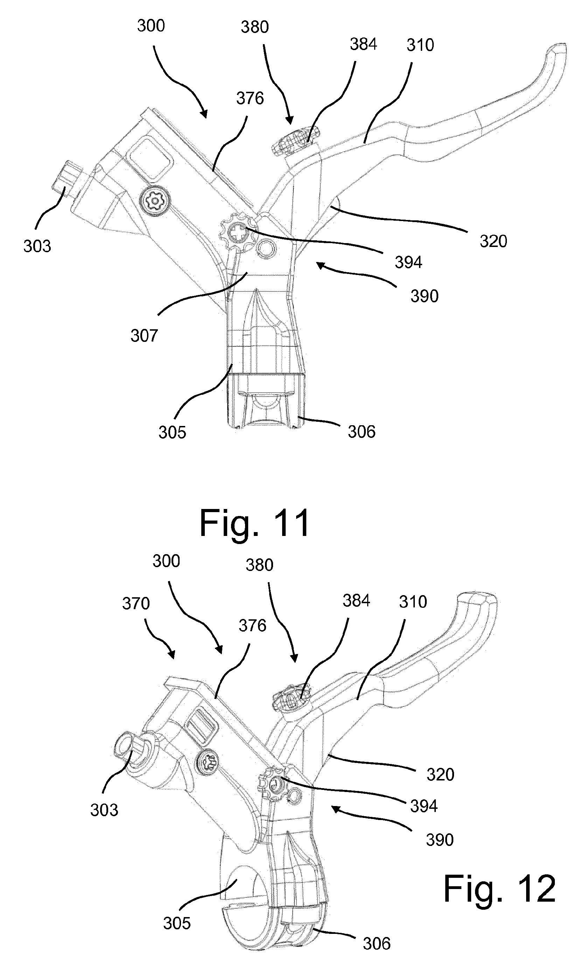

Die Figuren 9 bis 12 zeigen eine Geberarmatur für eine hydraulische Fahrradscheibenbremse gemäß einer weiteren Ausführung der Erfindung, die im Wesentlichen den im Zusammenhang mit den Figuren 1 bis 4 und 13 bis 14 bzw. 5 bis 8 beschriebenen Geberarmaturen entspricht. Gleiche bzw. sich entsprechende Teile sind mit sich entsprechenden aber um 100 bzw. 200 höheren Bezugszeichen bezeichnet. Im Folgenden werden nur die Unterschiede der Geberarmatur der Figuren 9 bis 12 gegenüber der Ausführung der Figuren 1 bis 4 und 13 bis 14 bzw. 5 bis 9 beschrieben. Im Übrigen wird auf die Beschreibung der anderen Ausführungsbeispiele und insbesondere die Beschreibung des Ausführungsbeispiels der Figuren 1 bis 4 und 13 bis 14 verwiesen.

Bei der in den Figuren 9 bis 12 gezeigten Geberarmatur 300 ist der Ausgleichsraum 270 zwischen dem Zylinder 240 und der Lenkeraufnahme 205 angeordnet. Dadurch mündet der Innenraum 272 des Stutzens 243 unmittelbar in den Behälter 274. Der Deckel 276 ist seitlich angeordnet.

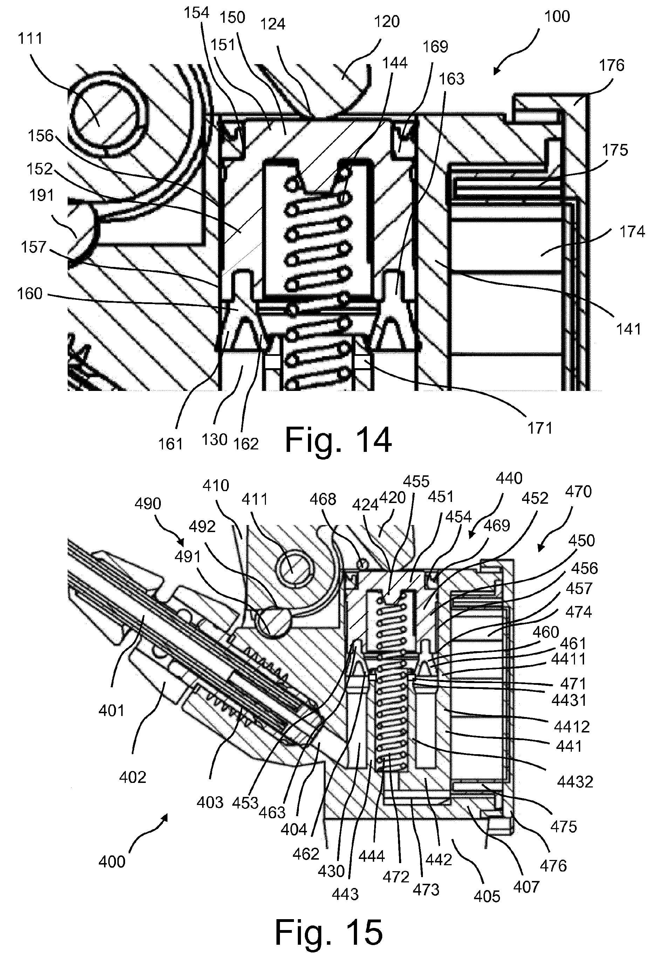

Fig. 15 zeigt eine Detailteilansicht einer Geberarmatur gemäß einer weiteren Ausführung der Erfindung, die im Wesentlichen der im Zusammenhang mit den Figuren 1 bis 4 und 13 bis 14 beschriebenen Geberarmatur entspricht. Gleiche bzw. sich entsprechende Teile sind mit sich entsprechenden aber um 300 höheren Bezugszeichen bezeichnet. Im Folgenden werden nur die Unterschiede der Ausführung von Fig. 15 gegenüber der Ausführung der Figuren 1 bis 4 und 13 bis 14 beschrieben. Im Übrigen wird auf die Beschreibung der anderen Ausführungsbeispiele und insbesondere die Beschreibung des Ausführungsbeispiels der Figuren 1 bis 4 und 13 bis 14 verwiesen. Insbesondere wird auf die Figuren 2 bis 3 verwiesen, deren Ansichten den Ansichten des Ausführungsbeispiels von Fig. 15 entspricht.

Das Ausführungsbeispiel von Fig. 15 unterscheidet sich von dem Ausführungsbeispiel in den Figuren 1 bis 4 und 13 bis 14 dadurch, dass sich der Druckraum 430 zwischen der Zylinderwand 441 und dem Stutzen 4431 im Querschnitt verkleinert, d.h. heißt, dass der Druckraum nach dem Überfahren der Verbindungsöffnung 471 durch die Dichtung 460 zunächst einen größeren Querschnitt aufweist. Nach ca. 1 mm weiterem Weg geht die Zylinderwand 441 von einem Bereich 4411 mit größerem Innendurchmesser in einem Bereich 4412 mit kleinerem Innendurchmesser über. Gleichzeitig oder ein wenig versetzt geht der Stutzen 443 von einem Bereich 4431 mit kleinerem Außendurchmesser in einen Bereich 4432 mit größerem Außendurchmesser über. Dadurch kann zunächst wegen des größeren Querschnitts des Druckraums mit einer geringen Bewegung des Kolbens relativ viel Hydraulikflüssigkeit verdrängt werden, wodurch das Lüftspiel zwischen der Bremsscheibe und den Bremsbelägen schneller überwunden werden kann und die Bremsbeläge schneller an der Bremsscheibe anliegen können. Sobald die Dichtung 460 bei einer weiteren Betätigung der Geberarmatur 400 den Übergang zu dem Bereich 4412 mit kleinerem Innendurchmesser und dem Bereich 4432 mit größerem Außendurchmesser überfährt, wird die hydraulische Übersetzung größer, so dass eine größere Kraft bei dem tatsächlichen Bremsvorgang ausgeübt werden kann. Durch die erfindungsgemäße Ausgestaltung kann die hydraulische Übersetzung zwischen dem Anfahren der Bremsbeläge und dem tatsächlichen Bremse um ca. 5 bis 20 % geändert werden. Eine derartig große Änderung ist dadurch möglich, dass eine Änderung sowohl an der Innenwand (Außenwand des Stutzens 443) als auch an der Außenwand (Innenwand des Zylinders 440) des Druckraums 430 erfolgt.

Selbstverständlich ist es auch bei den anderen Ausführungen der Erfindung möglich, den Durchmesser des Druckraums entsprechend der im Zusammenhang mit der Geberarmatur von Fig. 15 beschriebenen Weise zu variieren, um eine nicht lineare Kennlinie zu erhalten.

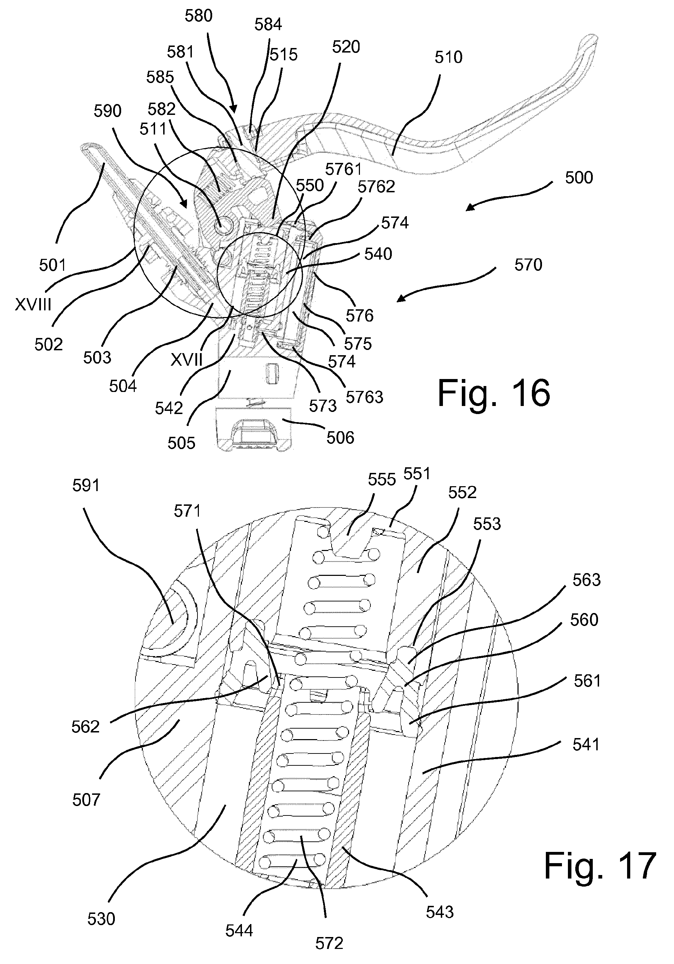

Die Figuren 16 bis 20 zeigen eine Geberarmatur für eine hydraulische Fahrradscheibenbremse gemäß einer weiteren Ausführung der Erfindung, die im Wesentlichen den im Zusammenhang mit den Figuren 1 bis 4 und 13 bis 14 bzw. 5 bis 8 bzw. 9 bis 12 bzw. Fig. 15 beschriebenen Geberarmaturen entspricht. Gleiche bzw. sich entsprechende Teile sind mit sich entsprechenden aber um 100, 200, 300 bzw. 400 höheren Bezugszeichen bezeichnet. Im Folgenden werden nur die Unterschiede der Geberarmatur der Figuren 16 bis 20 gegenüber der Ausführung der Figuren 1 bis 4 und 13 bis 14 bzw. 5 bis 9 bzw. 9 bis 12 bzw. 15 beschrieben. Im Übrigen wird auf die Beschreibung der anderen Ausführungsbeispiele und insbesondere die Beschreibung des Ausführungsbeispiels der Figuren 1 bis 4 und 13 bis 14 verwiesen.

Bei der in den Figuren 16 bis 20 gezeigten Geberarmatur 500 ist der Zylinder in einem Winkel von ungefähr 10° zum Ende des nicht dargestellten Lenkers hin geneigt, d.h. dass der Zylinder 540 nicht senkrecht auf dem nicht dargestellten Lenker (Die Lenkerachse ist durch die Lenkeraufnahme 505 und das Gegenstück 506 definiert) steht, sondern um ungefähr 10 Grad nach Links (in Fig. 16) geneigt ist.

Der Deckel 576 weist einen Vorsprung 5761 auf, der über den Kolben 550 hinausragt und somit als Wegbegrenzung des Kolbens 550 dient, wenn der Deckel 576 den Behälter 574 verschließt.

Der Deckel 576 muss an der Geberarmatur 500 angebracht werden, bevor die Geberarmatur 500 mit der Lenkeraufnahme 505 und dem Gegenstück 506 an dem Lenker montiert wird. Der Deckel 576 weist zwei Rastabschnitte 57662 und 5763 auf, mit denen er an dem Gehäuse 507 der Geberarmatur 500 einrastet. Dabei wird der Balg 575 in dem Behälter 574 gesichert und der Kolben 550 durch den Vorsprung 5761 gehindert, sich aus dem Zylinder 540 hinauszubewegen. Durch die Montage der Geberarmatur 500 an dem Lenker liegt der Deckel 576 auf dem Lenker auf und wird durch diesen in seiner Position auf dem Behälter 574 gehalten.

Die Dichtlippen 561, 562 der Dichtung 560 sind bei dieser Ausführung leicht versetzt angeordnet, d.h. dass in Richtung der Zylinderachse die äußere Dichtlippe 561 ungefähr 1 mm näher zum Zylinderboden 542 angeordnet ist.

Gemäß einer alternativen Ausführungsform kann der Deckel anstelle des lenkernahen Rastabschnitts einen Scharniervorsprung aufweisen, mit dem der Deckel in das Gehäuse eingehängt und dann nach oben geklappt werden kann. Auf seiner anderen Seite können ein Rastabschnitt und eine Verriegelungsvorrichtung vorgesehen sein, um den Deckel in seiner Position zu sichern.

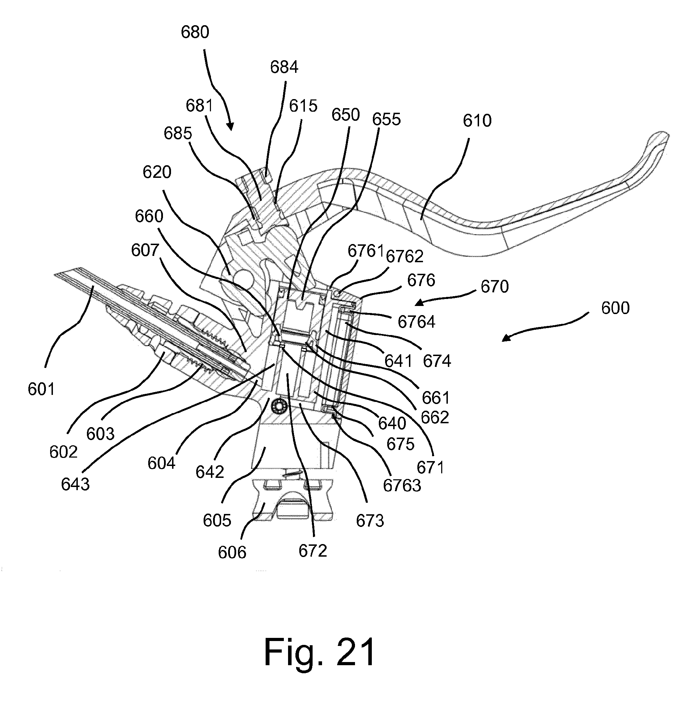

Figur 21 zeigt eine Geberarmatur für eine hydraulische Fahrradscheibenbremse gemäß einer weiteren Ausführung der Erfindung, die im Wesentlichen den im Zusammenhang mit den Figuren 1 bis 4 und 13 bis 14 bzw. 5 bis 8 bzw. 9 bis 12 bzw. 15 bzw. 16 bis 20 beschriebenen Geberarmaturen entspricht. Gleiche bzw. sich entsprechende Teile sind mit sich entsprechenden aber um 100 bzw. 200 bzw. 300 bzw. 400 bzw. 500 höheren Bezugszeichen bezeichnet. Im Folgenden werden nur die Unterschiede der Geberarmatur von Fig. 21 gegenüber den oben genannten Ausführungen der Figuren 1 bis 4 und 13 bis 14 bzw. 15 bzw. 5 bis 9 bzw. 5 bzw. 16 bis 20 beschrieben. Im Übrigen wird auf die Beschreibung der anderen Ausführungsbeispiele und insbesondere die Beschreibung des Ausführungsbeispiels der Figuren 16 bis 20 verwiesen.

Bei der in Fig. 21 gezeigten Ausführungsform weist der Deckel 676 anstelle des lenkernahen Rastabschnitts (siehe Ausführung der Figuren 16 bis 20) einen Scharniervorsprung 6763 auf, mit dem der Deckel 676 in das Gehäuse 607 eingehängt und dann nach oben geklappt werden kann. Auf der gegenüberliegenden, d.h. auf seiner in Fig. 21 oberen Seite, weist der Deckel 676 einen Haltevorsprung 6764 auf, mit dem der Deckel 676 an dem Gehäuse 607 gesichert wird. Dabei wird der Blag 675 gleichzeitig in dem Behälter 674 gepresst bzw. gehalten. Um den Deckel 676 in dieser Position zu sichern, ist ein Verriegelungsstift 6762 vorgesehen. Auf dieser Seite weist der Deckel 676 einen Vorsprung 6761 auf, mit der Kolben 650 in dem Zylinder 640 gesichert ist.

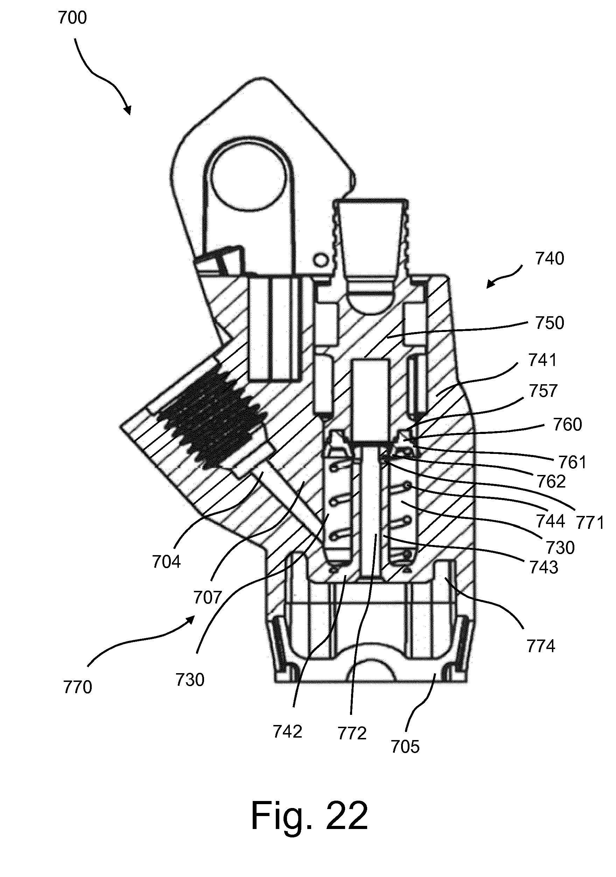

Figur 22 zeigt eine Geberarmatur für eine hydraulische Fahrradscheibenbremse gemäß einer weiteren Ausführung der Erfindung, die im Wesentlichen den im Zusammenhang mit den Figuren 1 bis 4 und 13 bis 14 bzw. 5 bis 8 bzw. 9 bis 12 bzw. 15 bzw. 16 bis 20 bzw. 21 beschriebenen Geberarmaturen entspricht. Gleiche bzw. sich entsprechende Teile sind mit sich entsprechenden aber um 100 bzw. 200 bzw. 300 bzw. 400 bzw. 500 bzw. 600 höheren Bezugszeichen bezeichnet. Im Folgenden werden nur die Unterschiede der Geberarmatur von Fig. 22 gegenüber den oben genannten Ausführungen der Figuren 1 bis 4 und 13 bis 14 bzw. 15 bzw. 5 bis 9 bzw. 5 bzw. 16 bis 20 bzw. 21 beschrieben. Im Übrigen wird auf die Beschreibung der anderen Ausführungsbeispiele verwiesen.

Im Gegensatz zu den in den Figuren 1 bis 21 gezeigten und oben beschriebenen Geberarmaturen ist bei der in Fig. 22 gezeigten Geberarmatur 700 die Feder 744 außerhalb des Stutzens 743 und nicht innerhalb des Stutzens 743 angeordnet. Der Behälter 744 grenzt an den nicht dargestellten Lenker.

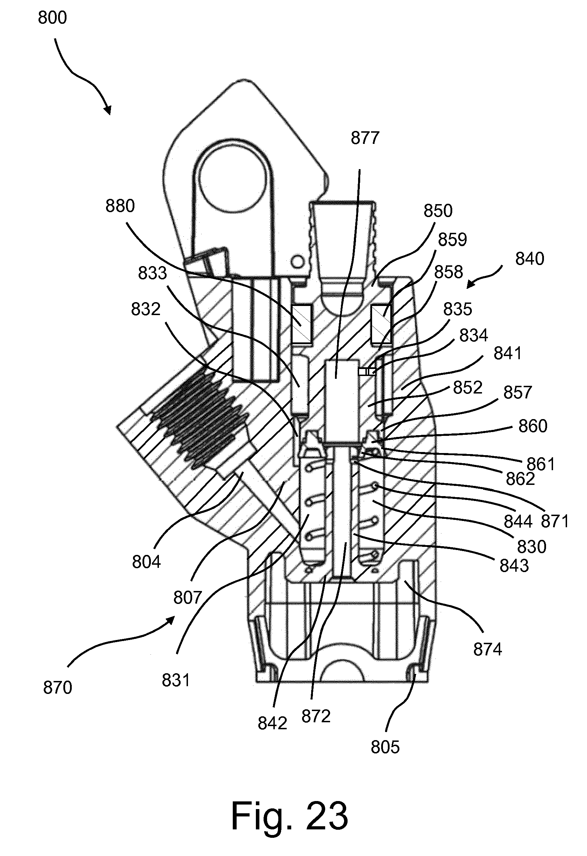

Figur 23 zeigt eine Geberarmatur für eine hydraulische Fahrradscheibenbremse gemäß einer weiteren Ausführung der Erfindung, die im Wesentlichen den im Zusammenhang mit den Figuren 1 bis 4 und 13 bis 14 bzw. 5 bis 8 bzw. 9 bis 12 bzw. 15 bzw. 16 bis 20 bzw. 21 bzw. 22 beschriebenen Geberarmaturen entspricht. Gleiche bzw. sich entsprechende Teile sind mit sich entsprechenden aber um 100 bzw. 200 bzw. 300 bzw. 400 bzw. 500 bzw. 600 bzw. 700 höheren Bezugszeichen bezeichnet. Im Folgenden werden nur die Unterschiede der Geberarmatur von Fig. 23 gegenüber den oben genannten Ausführungen der Figuren 1 bis 4 und 13 bis 14 bzw. 15 bzw. 5 bis 9 bzw. 5 bzw. 16 bis 20 bzw. 21 beschrieben. Im Übrigen wird auf die Beschreibung der anderen Ausführungsbeispiele und insbesondere die Beschreibung des Ausführungsbeispiels von Fig. 22 verwiesen.

Bei der in Fig. 23 gezeigten Geberarmatur 800 weist der Kolben 850 einen Bund 858 auf, der einen größeren Durchmesser als der Führungsabschnitt 857 hat, an dem die Dichtung 860 angeordnet ist. Hinter dem Bund 858 ist eine Dichtungsaufnahme 859 vorgesehen, in der eine weitere Dichtung 880 vorgesehen ist.

Der Druckraum 830 weist einen Hochdruckraum 831 und einen Niedrigdruckraum 833 auf. Der Hochdruckraum 831 ist über einen Kanal 832 mit dem Niedrigdruckraum verbunden. Die weitere Dichtung 880 dichtet den Niedrigdruckraum 832 gegenüber der Umgebung ab.

Der Ausgleichsraum 870 weist einen Innenraum 877 auf, der in dem Innenraum des Kolbens 850 ausgebildet ist. Der Niedrigdruckraum 833 ist über eine Verbindungsöffnung 834 mit dem Innenraum 835 verbunden. In der Verbindungsöffnung 834 ist ein Ventil 835 vorgesehen. Das Ventil ist derart ausgebildet, dass es eine Strömung von dem Niedrigdruckraum 833 in den Innenraum bis zu einem bestimmten Druck unterbindet. Beispielsweise kann das Ventil ein Überdruckventil sein.

Gemäß einer Alternativen Ausführung kann das Ventil 835 zusätzlich zu der Funktion eines Überdruckventils auch die Funktion eines Rückschlagventils aufweisen, damit es eine Strömung von dem Innenraum 877 in den Niedrigdruckraum 833 ermöglicht. Beispielsweise können dabei das Rückschlagventil und das Überdruckventil in separaten Verbindungsöffnungen angeordnet sein, die jeweils den Niedrigdruckraum 833 mit dem Innenraum 877 verbinden.

Der Kanal 832 ist in der Zylinderwand 841 derart ausgebildet, dass der Kanal 832 durch die äußere Dichtlippe 861 verschlossen wird, sobald die äußere Dichtlippe 861 der Dichtung 860 den Kanal 832 überfährt. Dabei ist die Dichtung 860 derart angeordnet und ausgebildet, dass bei der Betätigung der Geberarmatur zunächst die Verbindungsöffnung 871 von der inneren Dichtlippe 872 überfahren und somit die Verbindung zwischen dem Druckraum 830 und dem Ausgleichsraum 870 unterbrochen wird. Daher kann sich Druck in dem System aufbauen, wodurch bei der Betätigung der Geberarmatur die Bremsbeläge an die Bremsscheibe der Nehmerarmatur gefahren werden. Solange bei der weiteren Betätigung der Kanal 832 noch nicht von der äußeren Dichtlippe 861 überfahren ist, verdrängt der Kolben 850 das Hydraulikmedium mit dem vollen Querschnitt, der durch den Durchmesser des Bunds 858 abzüglich des Querschnittsfläche des Stutzens 843 definiert ist. Wegen der großen Fläche können die Bremsbeläge schnell das Lüftungsspiel überwinden. Sobald der Kanal 832 überfahren wird, verringert sich der effektive Querschnitt auf den Querschnitt des Hochdruckraums 831. Der Druck in dem Niedrigdruckraum 833 steigt an, bis er den Öffnungsdruck von dem Ventil 835 in der Verbindungsöffnung 834 übersteigt. Hydraulikmedium kann somit aus dem Niedrigdruckraum 833 in den Innenraum 877 strömen, der mit dem Innenraum 872 und dem Behälter 874 in Verbindung steht. Gleichzeitig kann sich der Kolben 850 weiter in dem Zylinder 840 in der Betätigungsrichtung bewegen, so dass sich ein größerer Druck in dem Hochdruckraum 831 aufbauen kann, der über die Leitung 804 auf die Nehmerarmatur wirkt. Wegen der besseren Übersetzung (kleinerer Querschnitt, längerer Weg) kann eine höhere Kraft beim Bremsen ausgeübt wird. Durch diese Anordnung kann wie bei der Ausführung von Fig. 15 das Lüftspiel schnell überwunden und anschließend eine große Bremskraft ausgeübt werden.

Beim Lösen der Bremse wird das aus dem Niedrigdruckraum 833 verdrängte Hydraulikmedium aus dem Innenraum 872 über die Verbindungsöffnung 871 und/oder aus dem Innenraum 877 durch das Ventil 835 und die Verbindungsöffnung 834 nachgefüllt.

Bei allen Ausführungen kann um den Lagerbolzen 111, 211, 311, 411 bzw. 511 eine nicht dargestellte Schenkelfeder vorgesehen sein, um den Bremshebel in Richtung Druckstück bzw. Kolben vorzuspannen. Bei einem Sturz kann sich der Bremshebel von dem Druckstück bzw. dem Kolben lösen, ohne den Kraftübertragungsweg zu beschädigen. Das hat den Vorteil, dass die Bremse funktionstüchtig bleibt, weil der Bremshebel entgegen seiner üblichen Betätigungsrichtung wegklappen kann, ohne die Bremse zu beschädigen.

## Patentansprüche

1. Geberarmatur für eine hydraulische Bremse, die einen Ausgleichsraum (170, 270, 370, 470, 570), einen Zylinder (140, 240, 340, 440, 540), in dem ein Kolben (150, 250, 350, 450, 550) verschiebbar angeordnet ist, einen in dem Zylinder (140, 240, 340, 440, 540) angeordneten Druckraum (130, 230, 330, 430, 530), der über zumindest eine Verbindungsöffnung mit dem Ausgleichsraum verbunden ist, und eine Dichtung (160, 260, 360, 460, 560) zur Unterbrechung der Verbindung zwischen dem Druckraum (130, 230, 330, 430, 530) und dem Ausgleichsraum (170, 270, 370, 470, 570) aufweist,
**dadurch gekennzeichnet, dass** die Dichtung (160, 260, 360, 460, 560) den Ausgleichsraum (170, 270, 370, 470, 570) und den Druckraum (130, 230, 330, 430, 530) gegenüber der Umgebung abdichtet.

2. Geberarmatur für eine hydraulische Bremse, nach Anspruch 1, bei der die Dichtung (160, 260, 360, 460, 560) den Ausgleichsraum (170, 270, 370, 470, 570) gegenüber der Umgebung abdichtet, wenn die Dichtung (160, 260, 360, 460, 560) die Verbindung zwischen Druckraum (130, 230, 330, 430, 530) und Ausgleichsraum (170, 270, 370, 470, 570) unterbrochen hat.

3. Geberarmatur für eine hydraulische Bremse, nach einem der vorhergehenden Ansprüche, bei der der Kolben (150, 250, 350, 450, 550) eine sich von einem Kolbenboden (151, 251, 351, 451, 551) erstreckende Kolbenwand (152, 252, 352, 452, 552) aufweist, an deren Ende die Dichtung (160, 260, 360, 460, 560) angeordnet ist.

4. Geberarmatur für eine hydraulische Bremse, nach einem der vorhergehenden Ansprüche, bei der in dem Zylinder (140, 240, 340, 440, 540) ein hohler Stutzen (143, 243, 343, 443, 543) angeordnet ist, der in den Kolben (150, 250, 350, 450, 550) eintaucht.

5. Geberarmatur nach einem der vorhergehenden Ansprüche, bei der der Druckraum (130, 230, 330, 430, 530) durch die Zylinderwand (141, 241, 341, 441, 541) des Zylinders, den Zylinderboden (142, 242, 342, 442, 542) des Zylinders, den Stutzen (143, 243, 343, 443, 543) und die Dichtung (160, 260, 360, 460, 560) definiert ist.

6. Geberarmatur nach einem der vorhergehenden Ansprüche, bei der die Dichtung (160, 260, 360, 460, 560) zwei Dichtlippen (161, 162; 261, 262; 361, 362; 461, 462; 561, 562) aufweist.

7. Geberarmatur nach einem der vorhergehenden Ansprüche, bei der der Außendurchmesser des Stutzen (443) in einem Bereich (4431), der näher zum Kolben (450) liegt, kleiner als der Außendurchmesser des Stutzen (443) in einem Bereich (4432) ist, der vom Kolben (450) weiter entfernt liegt.

8. Geberarmatur nach einem der vorhergehenden Ansprüche, bei der der Innendurchmesser der Zylinderwand (441) des Zylinders (440) in einem Bereich (4411), der näher zum Kolben (450) liegt, größer als der Innendurchmesser der Zylinderwand (441) in einem Bereich (4412) ist, der vom Kolben (450) weiter entfernt liegt.

9. Geberarmatur für eine hydraulische Bremse, nach einem der vorhergehenden Ansprüche, bei der die Rückstellfeder (144, 244, 344, 444, 544) in einem Abschnitt des Ausgleichsraums (170, 270, 370, 470, 570) angeordnet ist.

10. Geberarmatur für eine hydraulische Bremse, nach einem der vorhergehenden Ansprüche, bei der das Verhältnis der Länge des Kolbens zu dem Durchmesser des Kolbens ungefähr 3/6 bis 4/3 beträgt.

11. Geberarmatur für eine hydraulische Bremse, nach einem der vorhergehenden Ansprüche, die eine Druckpunkteinstelleinrichtung (190, 290, 390, 490, 590) aufweist,wobei die Druckpunkteinstelleinrichtung (190, 290, 390, 490, 590) derart ausgebildet und angeordnet ist, dass die Verbindung zwischen dem Ausgleichsraum (130, 230, 330, 430, 530) und dem Druckraum (130, 230, 330, 430, 530) in der Ruhelage unterbrechbar ist.

12. Geberarmatur nach Anspruch 11, bei der die Druckpunkteinstelleinrichtung (190, 290, 390, 490, 590) eine Rasteinrichtung aufweisen.

13. Geberarmatur nach Anspruch 12, bei der die Rasteinrichtung derart ausgebildet und angeordnet ist, dass die Verbindung zwischen dem Ausgleichsraum (130, 230, 330, 430, 530) und dem Druckraum (130, 230, 330, 430, 530) in der Ruhelage nicht unterbrochen ist, wenn sich die Rasteinrichtung in einer eingerasteten Stellung befindet.

14. Geberarmatur für eine hydraulische Bremse, nach einem der vorhergehenden Ansprüche, wobei der Ausgleichsraum (170, 270, 370, 470, 570) einen Deckel (576) aufweist, der einen Vorsprung (5761) aufweist, der über den Kolben (150, 250, 350, 450, 550) hinausragt.

15. Hydraulische Scheibenbremse mit einer Geberarmatur nach einem der vorhergehenden Ansprüche.

## Claims

1. Master cylinder for a hydraulic brake, comprising a compensating chamber (170, 270, 370, 470, 570), a cylinder (140, 240, 340, 440, 540) in which a piston (150, 250, 350, 450, 550) is movably arranged, a pressure chamber (130, 230, 330, 430, 530), which is arranged in the cylinder and is connected to the compensating chamber via at least one connecting opening, and a gasket (160, 260, 360, 460, 560) for disconnecting the connection between the pressure chamber (130, 230, 330, 430, 530) and the compensating chamber (170, 270, 370, 470, 570),
**characterized in that** the gasket (160, 260, 360, 460, 560) seals the compensating chamber (170, 270, 370, 470, 570) and the pressure chamber (130, 230, 330, 430, 530) against the environment.

2. Master cylinder for a hydraulic brake according to claim 1, in which the gasket (160, 260, 360, 460, 560) seals the compensating chamber (170, 270, 370, 470, 570) against the environment when the gasket (160, 260, 360, 460, 560) disconnects the connection between the pressure chamber (130, 230, 330, 430, 530) and the compensating chamber (170, 270, 370, 470,570).

3. Master cylinder for a hydraulic brake according to any of the preceding claims, wherein the piston (150, 250, 350, 450, 550) has a piston wall (152, 252, 352, 452, 552) which extends from a piston bottom (151, 251, 351, 451, 551) and at the end of which the gasket (160, 260, 360, 460, 560) is arranged.

4. Master cylinder for a hydraulic brake according to any of the preceding claims, in which a hallow connecting piece (143, 243, 343, 443, 543) is arranged in the cylinder (140, 240, 340, 440, 540), said connecting piece being immersed into the piston (150, 250, 350, 450, 550).

5. Master cylinder according to any of the preceding claims, in which the pressure chamber (130, 230, 330, 430, 530) is defined by the cylinder wall (141, 241, 341, 441, 541) of the cylinder, the cylinder bottom (142, 242, 342, 442, 542) of the cylinder, the connecting piece (143, 243, 343, 443, 543) and the gasket (160, 260, 360, 460, 560).

6. Master cylinder according to any of the preceding claims, in which the gasket (160, 260, 360, 460, 560) has two sealing lips (161, 162; 261, 262; 361,362;461,462;561,562).

7. Master cylinder according to any of the preceding claims, in which the outer diameter of the connecting piece (443) is smaller in an area (4431) which is closer to the piston (450) than the outer diameter of the connecting piece (443) in a region (4432) that is further away from the piston (450).

8. Master cylinder according to any of the preceding claims, in which the inner diameter of the cylinder wall (441) of the cylinder (440) is larger in an area (4411) which is closer to the piston (450) than the inner diameter of the cylinder wall (441) in an area (4412) that is further away from the piston (450).

9. Master cylinder for a hydraulic brake according to any of the preceding claims, in which the return spring (144, 244, 344, 444, 544) is arranged in a segment of the compensating chamber (170, 270, 370, 470, 570).

10. Master cylinder for a hydraulic brake according to any of the preceding claims, in which the ratio of the length of the piston to the diameter of the piston is approximately 3:6 to 4:3.

11. Master cylinder for a hydraulic brake according to any of the preceding claims, which has a pressure point adjusting device (190, 290, 390, 490, 590), wherein the pressure point adjusting device (190, 290, 390, 490, 590) is made and arranged in such a way that the connection between the compensating chamber (130, 230, 330, 430, 530) and the pressure chamber (130, 230, 330, 430, 530) can be disconnected in the rest position.

12. Master cylinder according to claim 11, in which the pressure point adjusting device (190, 290, 390, 490, 590) has a latching device.

13. Master cylinder according to claim 12, in which the latching device is made and arranged in such a way that the connection between the compensating chamber (130, 230, 330, 430, 530) and the pressure chamber (130, 230, 330, 430, 530) is not disconnected in the rest position when the latching device is in a latched position.

14. Master cylinder for a hydraulic brake according to any of the preceding claims, wherein the compensating chamber (170, 270, 370, 470, 570) has a cover (576) which includes a projection (5761) that protrudes beyond the piston (150, 250, 350, 450, 550).

15. Hydraulic disk brake having a master cylinder according to any of the preceding claims.

## Revendications

1. Dispositif émetteur pour un frein hydraulique qui comprend une chambre de compensation (170, 270, 370, 470, 570), un cylindre (140, 240, 340, 440, 540) dans lequel un piston (150, 250, 350, 450, 550) est agencé de façon mobile, une chambre de compression (130, 230, 330, 430, 530) qui est agencée dans le cylindre (140, 240, 340, 440, 540) et qui est reliée à la chambre de compensation via au moins une ouverture de communication, et un joint d'étanchéité (160, 260, 360, 460, 560) pour interrompre la communication entre la chambre de compression (130, 230, 330, 430, 530) et la chambre de compensation (170, 270, 370, 470, 570),
**caractérisé en ce que** le joint d'étanchéité (160, 260, 360, 460, 560) étanche la chambre de compensation (170, 270, 370, 470, 570) et la chambre de compression (130, 230, 330, 430, 530) par rapport à l'environnement.

2. Dispositif émetteur pour un frein hydraulique selon la revendication 1, dans lequel le joint (160, 260, 360, 460, 560) étanche la chambre de compensation (170, 270, 370, 470, 570) par rapport à l'environnement lorsque le joint d'étanchéité (160, 260, 360, 460, 560) a interrompu la communication entre la chambre de compression (130, 230, 330, 430, 530) et la chambre de compensation (170, 270, 370, 470, 570).

3. Dispositif émetteur pour un frein hydraulique selon l'une des revendications précédentes, dans lequel le piston (150, 250, 350, 450, 550) comprend une paroi de piston (152, 252, 352, 452, 552) qui s'étend depuis un fond de piston (151, 251, 351, 451, 551) et à l'extrémité de laquelle est agencé le joint d'étanchéité (160, 260, 360, 460, 560).

4. Dispositif émetteur pour un frein hydraulique selon l'une des revendications précédentes, dans lequel un manchon creux (143, 243, 343, 443, 543) est agencé dans le cylindre (140, 240, 340, 440, 540) et vient plonger dans le piston (150, 250, 350, 450, 550).

5. Dispositif émetteur selon l'une des revendications précédentes, dans lequel la chambre de compression (130, 230, 330, 430, 530) est définie par la paroi (141, 241, 341, 441, 541) du cylindre, par le fond (142, 242, 342, 442, 542) du cylindre, par le manchon (143, 243, 343, 443, 543) et par le joint d'étanchéité (160, 260, 360, 460, 560).

6. Dispositif émetteur selon l'une des revendications précédentes, dans lequel le joint d'étanchéité (160, 260, 360, 460, 560) comprend deux lèvres d'étanchéité (161, 162 ; 261, 262 ; 361, 362 ; 461, 462 ; 561, 562).

7. Dispositif émetteur selon l'une des revendications précédentes, dans lequel, dans une zone (4431) plus proche du piston (450), le diamètre extérieur du manchon (443) est plus petit que le diamètre extérieur du manchon (443) dans une zone (4432) qui est plus éloignée du piston (450).

8. Dispositif émetteur selon l'une des revendications précédentes, dans lequel dans une zone (4411) plus proche du piston (450), le diamètre intérieur de la paroi (441) du cylindre (440) est plus grand que le diamètre intérieur de la paroi de cylindre (441) dans une zone (4412) qui est plus éloignée du piston (450).

9. Dispositif émetteur pour un frein hydraulique selon l'une des revendications précédentes, dans lequel le ressort de rappel (144, 244, 344, 444, 544) est agencé dans une portion de la chambre de compensation (170, 270, 370, 470, 570).

10. Dispositif émetteur pour un frein hydraulique selon l'une des revendications précédentes, dans lequel le rapport de la longueur du piston sur le diamètre du piston est d'environ 3/6 à 4/3.

11. Dispositif émetteur pour un frein hydraulique selon l'une des revendications précédentes, qui comprend un dispositif de réglage de point de pression (190, 290, 390, 490, 590), le dispositif de réglage de point de pression (190, 290, 390, 490, 590) étant réalisé et agencé de telle sorte que la communication entre la chambre de compensation (130, 230, 330, 430, 530) et la chambre de compression (130, 230, 330, 430, 530) est susceptible d'être interrompue en position de repos.

12. Dispositif émetteur selon la revendication 11, dans lequel le dispositif de réglage de point de pression (190, 290, 390, 490, 590) comprend un moyen d'enclenchement.

13. Dispositif émetteur selon la revendication 12, dans lequel le moyen d'enclenchement est réalisé et agencé de telle sorte que la communication entre la chambre de compensation (130, 230, 330, 430, 530) et la chambre de compression (130, 230, 330, 430, 530) n'est pas interrompue en position de repos lorsque le moyen d'enclenchement se trouve dans une position enclenchée.

14. Dispositif émetteur pour un frein hydraulique selon l'une des revendications précédentes, dans lequel la chambre de compensation (170, 270, 370, 470, 570) comprend un couvercle (576) qui présente une saillie (5761) qui dépasse au-delà du piston (150, 250, 350, 450, 550).

15. Frein à disque hydraulique comportant un dispositif émetteur selon l'une des revendications précédentes.
